(19) Europäisches Patentamt
European Patent Office
Office européen des brevets

(11) **EP 3 884 159 B1**

(12) **EUROPEAN PATENT SPECIFICATION**

(45) Date of publication and mention
of the grant of the patent:
**25.03.2026 Bulletin 2026/13**

(21) Application number: **19809892.3**

(22) Date of filing: **21.11.2019**

(51) International Patent Classification (IPC):
*F03G 7/06* (2006.01)     *G02B 7/00* (2021.01)
*G02B 7/08* (2021.01)     *G03B 3/10* (2021.01)
*G03B 5/00* (2021.01)

(52) Cooperative Patent Classification (CPC):
**G02B 7/08; F03G 7/06143; F03G 7/0616;
F03G 7/0665; F03G 7/067; G02B 7/005;
G03B 3/10; G03B 5/00;** G03B 2205/0007;
G03B 2205/0046; G03B 2205/0076

(86) International application number:
**PCT/GB2019/053300**

(87) International publication number:
**WO 2020/104810 (28.05.2020 Gazette 2020/22)**

(54) **SLACK SMA WIRE IN SMA ACTUATOR ASSEMBLIES**

FORMGEDÄCHTNISLEGIERUNGSSCHLAFFSEIL IN
FORMGEDÄCHTNISLEGIERUNGSAKTUATORANORDNUNGEN

FIL SMA MOU DANS DES ENSEMBLES ACTIONNEURS SMA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.11.2018 GB 201818941**

(43) Date of publication of application:
**29.09.2021 Bulletin 2021/39**

(73) Proprietor: **Cambridge Mechatronics Limited
Cambridge CB4 0WG (GB)**

(72) Inventor: **BURBRIDGE, Daniel John
Cambridge Cambridgeshire CB4 1YG (GB)**

(74) Representative: **Cambridge Mechatronics Limited
IP Department
306 Cambridge Science Park
Milton Road
Cambridge, Cambridgeshire CB4 0WG (GB)**

(56) References cited:
**EP-A1- 3 008 339       JP-A- 2012 137 668
JP-A- 2012 137 668       JP-A- 2012 137 668
JP-A- H04 124 472       US-A1- 2011 187 296
US-A1- 2011 187 296       US-A1- 2011 187 296**

**Description**

The present techniques relate to shape memory alloy (SMA) actuator assemblies wherein slack lengths of SMA wire are used. A first aspect of the present techniques relates to manufacture of such SMA actuator assemblies. A second aspect of the present techniques relates to control of such SMA actuator assemblies.

SMA actuators are known for use in handheld electronic devices, such as cameras and mobile phones. Such actuators may be used for example in miniature cameras to effect focus, zoom or optical image stabilization (OIS). By way of example, International Patent Publication No. WO2007/113478 discloses an SMA actuator arrangement for a camera providing autofocus using a single length of SMA wire and WO2013/175197 and WO2014/083318 disclose a compact SMA actuator arrangement for a camera providing OIS using four length of SMA wires. Further, WO2011/104518 discloses an SMA actuator arrangement comprising eight lengths of SMA wires capable of effecting both autofocus and OIS. In each of these disclosures, each length of SMA wire is held between a static part and a movable part that is movable with respect to the static part, and the preferred method of fixing is crimping in which a crimp portion is crimped around the length of SMA wire to form a crimp holding the length of SMA wire.

JP-A-2012137668 describes a a drive module suitable for driving an optical system so as to adjust the position of a lens for auto focussing. The drive module includes an SMA actuator which is controlled on the basis of measuring the resistance of the wire.

U-A-2011/187296 describes an SMA actuator system with position control based on measuring resistance of an actuator wire.

In a first aspect of the present techniques manufacture of such SMA actuator assemblies is considered. In the prior art examples mentioned above, it has been assumed that it is necessary during manufacture to attach the length of SMA wire under tension such that its length and tension can be accurately known in the unpowered state. In such an actuator, the length of SMA wire is under

greater tension in the unpowered state. However, the present techniques is concerned with manufacturing the SMA actuator assembly using a length of SMA wire that is slack, for example being temporarily slack during manufacture, and/or being slack in the absence of a drive signal, or energy supplied by a suitable heat source, in the manufactured SMA actuator assembly in order to increase the available stroke.

In such cases, it is desirable to measure the degree of slack of the SMA actuator assembly in order to control the manufacturing process and/or assess newly manufactured actuator assemblies. However, the degree of slack is difficult to measure due to the small size and uncontrolled path of the length of SMA wire. One might consider applying tension to the length of SMA wire to pull it taught but that tension can itself affect the measurement.

The energy supplied to the lengths of SMA wire may be in the form of drive

signal, e.g. electrical current, passing through the lengths of SMA wire, thereby effecting resistive heating of the lengths of SMA wire. Alternatively, or in addition, the lengths of SMA wire may be heated by a suitable heat source. The use of an external heat source allows the SMA wires to be measured and the SMA actuator calibrated during the manufacturing process. The heat source may transfer heat to the lengths of SMA wire conductively, convectively or by radiation. For example, the heat source may be one or more of a contact heater such as a hot plate, an oven, a fan heater, and an electromagnetic radiation source such as laser.

According to the first aspect of the present techniques not forming part of the present invention, there is provided a

method of detecting the degree of slack of plural lengths of shape memory alloy wire where at least one of which is held slack, the method comprising: heating the at least one length of shape memory alloy wire to cause contraction of the lengths of shape memory alloy wire; measuring an electrical characteristic of the lengths of shape memory alloy wire during said contraction of the lengths of shape memory alloy wire; and deriving a measure of the degree of slack of the lengths of shape memory alloy wire from the measured electrical characteristic. In some embodiments, the method detects the degree of slack of plural lengths of shape memory alloy wire which are held slack.

The method provides an accurate and reliable method detecting the degree of slack of the plural lengths of SMA wire based on an appreciation that the degree of slack is represented by electrical characteristics experienced when the lengths of SMA wire is driven to contract from a slack state. More specifically, this may be understood as follows.

When a length of SMA is driven from a slack state to contract, the temperature of the length of SMA wire is initially below the start of phase transition temperature. Thus, the initial heating causes the resistance to increase as the resistivity of the SMA material increases. As the length of SMA wire reaches the phase transition temperature it changes phase from a Martensitic state to an Austenitic state, resulting in a reduction in resistivity. This causes a reduction in length and an increase in area. These factors combined cause a maximum resistance to be experienced after which the resistance reduces. The resistance continues to reduce until the length of SMA wire experiences mechanical opposition, at which point a minimum resistance is experienced. It has been appreciated that, with increasing degrees of slack of the length of SMA wire in the initial slack state, the magnitude of the maximum resistance increases, and the magnitude of the minimum resistance decreases. The slack in a length or lengths SMA wire may be referred to as the amount of tension in the SMA wires in an unenergized state. A slack wire may mean the wire has a degree of free movement, or it may mean the unenergized wire is relaxed.

Accordingly, a measure of the degree of slack may be derived using the resistance of the plural lengths of shape memory alloy wire as the electrical characteristic. In that case, the measure may be either the maximum resistance as the each length of shape memory alloy wire starts to contract or the minimum resistance as the lengths of shape memory alloy wire ceases to contract. However, additional accuracy is achieved by using both these factors in combination, so that the measure is the difference between the maximum resistance as the lengths of shape memory alloy wire start to contract and the minimum resistance as the lengths of shape memory alloy wire ceases to contract.

However, neither these specific measures nor the use of resistance is essential and other measures of the degree of slack may be derived from the resistance or other electrical characteristics based on similar considerations of the electro-mechanical properties of slack SMA wire subject to a drive signal, or energy supplied by a heat suitable heat source, which causes it to contract. For example, use of the rate of change of resistance, current or another electrical characteristic may be used to assess whether the length of SMA wire is in the phase transition.

This may be understood as being related to the known fact that during normal driving the change in resistance of a length of SMA wire is related to the change in length that SMA wire, but during such driving the length of SMA wire is in tension and not slack.

The step of heating the lengths of shape memory alloy wire may be performed by supplying a drive signal, or energy supplied by a suitable heat source, to the lengths of shape memory alloy wire sufficient to cause the contraction. Such a method is easy to perform because it requires merely the electrical connection of circuitry to the lengths of SMA wire, which may for example be external circuitry or added functionality of the control circuitry for the lengths of SMA wire which is assembled with an actuator assembly.

Alternatively, the step of heating the lengths of shape memory alloy wire may be performed by externally heating the lengths of shape memory alloy wire, for example by putting the lengths of shape memory alloy wire in a hot environment such as an oven, or on a hot plate, or by laser heating.

Such a method may be applied to plural lengths of SMA wires where at least one of which is held slack in a variety of assemblies and sub-assemblies during a manufacturing process. Such a method may be applied to plural lengths of SMA wires which are held slack in a variety of assemblies and sub-assemblies during a manufacturing process.

In one type of example, at least one of the lengths of shape memory alloy wire may be held slack between two connection portions that held at fixed relative positions. Such connection portions may for example be crimp portions that are crimped around the respective length of shape memory alloy wire. In such a case, the minimum resistance is experienced when the length of SMA wire ceases to contract because the slack has been taken up and the connection portions provide mechanical resistance against further contraction.

As an example, the length of shape memory alloy wire may be held in a shape memory alloy subassembly comprising at least one body portion formed integrally with the pair of crimp portions from a sheet of material.

In another type of example, the lengths of shape memory alloy wire may be held between a static part and a movable part that is movable with respect to the static part in a SMA actuator assembly and at least one length of shape memory wire may be slack in the absence of a drive signal, or energy supplied by a suitable heat source. For example, the at least one length of SMA wire may be held slack between crimp portions which are crimped around the respective lengths of shape memory alloy wire. Such crimp portions may be respectively mounted on the static part and the movable part, or may both be mounted on the static point with the length of SMA wire also being connected to the static part by being hooked over a hook feature on the movable part (or vice versa). The method may be applied to plural lengths of SMA wire each held slack between respective crimp portions.

As an example, the SMA actuator assembly may be an optical device in which the movable part is an optical element, for example a lens element comprising at least one lens, or any other type of optical element.

Here, the steps of supplying a drive signal, or energy by a suitable heat source, to the lengths of shape memory alloy wire and measuring an electrical characteristic of the plural lengths of shape memory alloy wire may be performed while holding the movable part in a fixed position relative to the static part. In such a case, the minimum resistance is experienced when the lengths of SMA wire cease to contract because the slack has been taken up and mechanical resistance against further contraction is provided by the means holding the movable part.

Alternatively, the steps of supplying a drive signal, or energy by a suitable heat source, to the lengths of shape memory alloy wires and measuring an electrical characteristic of the plural shape memory alloy wires may be performed while allowing the movable part to move relative to the static part. In such a case, the minimum resistance is experienced when the lengths of SMA wire cease to contract because the slack has been taken up and the lengths of SMA wire provide mechanical resistance to each other against further contraction.

The plural lengths of SMA wire may be opposed or not, e.g. the plural lengths of SMA wire may be angled to each other. The degree of slack in the plural lengths of SMA wire may be derived in respect of the lengths of shape memory alloy wire individually, differentially or together. Preferably, the degree of slack may be derived in respect of the lengths of shape memory wire together and therefrom, determine the degree of total slack or average slack in the actuator assembly.

In one form of the method, when the electrical characteristic is the resistance of each of plural shape memory alloy wires and a measure of the degree of slack may be derived in respect of each of the plural shape memory alloy wires and as the difference between the resistance of the shape memory alloy wire prior to supplying the drive signal, or energy by a suitable heat source, and the resistance of the shape memory alloy wire when all of the plural shape memory alloy wires have come into tension.

As an example, a degree of total slack in the actuator assembly may be determined from the sum of degree of slack in the lengths of shape memory alloy wire, or a degree of average slack in the actuator assembly may be determined from the average degree of slack in the lengths of shape memory alloy wire.

The total amount of slack in the actuator assembly may be taken as a metric related to the total reduction in measured resistance in all the SMA wires between the onset of heating and when they are fully tensioned. Similarly, the average slack of the actuator assembly corresponds to the average reduction in measured resistance in all the SMA wires between the onset of heating and when they are fully tensioned. Both of these values may be used for monitoring manufacturing processes where a metric applied per wire does not relate solely to slack, but also to the actuator assembly position when the metric was obtained.

For example, a reference position and offset in the resistance or power or temperature may be applied in SMA actuator assemblies, in order to reach a known mechanical opposition point. In SMA actuator assemblies with multiple shape memory wires, particularly where differences between the lengths of SMA wire are used to control a degree of freedom of the actuator assemblies, such reference position may not be applicable for each individual wire independently. The method according to the present invention enables the average or total slack in the actuator system to be derived while determining the position where the actuator assembly is at the centre of its stroke.

The difference between the reduction in resistance as measured from the plural lengths of wire corresponds to the difference in the available stroke of respective wires before they become slack. Therefore, by centring the actuator assembly at a position where the wires have reached their maximum extensions, all SMA wires may contract by the same amount. For example, the SMA wires may experience a similar degree of reduction in resistances, during start-up.

Another form of the method is applicable to the case that the plural shape memory alloy wires includes substantially opposed shape memory alloy wires. In that case, the measure of the degree of slack may be derived in respect of the opposed lengths of shape memory alloy wire individually, differentially or together. Deriving the degree of slack in respect of opposed lengths of SMA wire together provides a simplification of the method because it is only necessary to measure the resistance at the beginning and end of the contraction of the lengths of SMA wire, without the need to continuously monitor the resistance in order to detect the maximum resistance or minimum resistance.

The method may be applied to lengths of SMA wire at any stage in a manufacturing process. The method is particularly suitable for lengths of SMA wire that is held slack between respective crimp portions crimped around the lengths of SMA wire, but is more generally applicable to lengths of SMA wire held in any other way.

In one example, the method may be applied to lengths of SMA wire being held slack between respective crimp portions which are crimped around the lengths of SMA wire and are respectively mounted on a static part and a movable part that is movable with respect to the static part in a SMA actuator assembly, for example an optical element which may be a lens element comprising at least one lens.

In another example, the method may be applied to lengths of SMA wire that are held slack between respective crimp portions crimped around the length of SMA wires in an SMA sub-assembly comprising at least one body portion formed integrally with the pair of crimp portions from a sheet of material. Such an SMA sub-assembly may be used in the manufacture of an SMA actuator assembly.

The measure of the degree of slack may be used in various ways in the manufacture. In one example, the measure of the degree of slack may be used for quality control. In another example, the method may further comprise adjusting the degree of slack of the length of SMA wire in response to the derived measure. In that case, the lengths of SMA wire may initially be held slack between crimp portions that are partly crimped around the length of SMA wire, in which case the method may further comprise fully crimping the crimp portions around the respective lengths of SMA wire after said step of adjusting the degree of slack of the lengths of SMA wire.

Optionally, the method measures the degree of slack of lengths of shape memory alloy wire simultaneously or each length in turn.

Further according to the first aspect of the present techniques, there is provided an apparatus for measuring the degree of slack of plural lengths of shape memory alloy wire where at least one of which is held slack which comprises: a drive circuit arranged to supply a drive signal, or energy by a suitable heat source, to the lengths of shape memory alloy wire sufficient to cause contraction of the lengths of shape memory alloy wire; a measurement circuit arranged to measure an electrical characteristic of the lengths of shape memory alloy wire during said contraction of the lengths of shape memory alloy wire; and a processor arranged to derive a measure of the degree of slack of the lengths of shape memory alloy wire from the measured electrical characteristic.

In a second aspect of the present techniques control of SMA actuator assemblies according to claim 1 is considered. A known technique for controlling an SMA actuator assembly is resistance-feedback closed loop control. In such a case, energy in the form of drive signals, or from a suitable heat source, are supplied to the lengths of shape memory alloy wire while measuring resistances of the lengths of shape memory alloy wire, and a closed-loop control loop controls the energy supplied in accordance with target signals representing a target position of the movable part and feedback signals representing the measured resistances.

In the prior art examples mentioned above, it has been assumed that it is necessary during manufacture to attach the length of SMA wire under tension such that its length and tension can be accurately known in the unpowered state. In such an actuator, the length of SMA wire is under greater tension in the unpowered state. On the other hand, there are particular advantages in an SMA actuator assemblies using lengths of SMA wire that are held slack in the absence of a energy supplied. This may for example simplify manufacture and/or increase the available stroke.

However, particular issues with such control arise when the SMA actuator assembly includes plural SMA wires in a substantially opposed arrangement where the SMA wires drive movement of the movable part with respect to the static part in opposite directions in one or more degrees of freedom on application of supplied energy thereto. In particular, it may be difficult to control the degree of slack in the individual lengths of SMA wires during manufacture, resulting in the lengths of SMA wire having actual lengths that are different from their nominal lengths, often in an unpredictable manner. That makes it difficult to accurately control the position of the movable part about a known centre position. This is important for uniformity of performance between parts, repeatability of position is required for some applications, for example in the case of a camera when information from multiple cameras is used to form a single image. It is desirable to maximise the actuator stroke in selected directions and so knowledge of the centre of the actuator's stroke is needed. This is a particular issue for plural SMA wires in an opposed arrangement because the position in the or each degree of freedom is dependent on the degree of slack of all the SMA wires that drive movement in opposite directions in that degree of freedom.

According to a second aspect of the present techniques, there is provided a method of controlling a shape memory alloy actuator assembly comprising a static part, a movable part that is movable with respect to the static part, and plural shape memory alloy wires held between the static part and the movable part and arranged to drive movement of the movable part with respect to the static part in substantially opposite directions in one or more degrees of freedom on application of supplied energy thereto, the plural shape memory alloy wires being slack in the absence of supplied energy, in the form of or drive signal, or heat supplied by a suitable heat source, the method comprising: measuring electrical characteristics of the lengths of shape memory alloy wire that depend on the degrees of slack of the lengths of shape memory alloy wire in the absence of supplied energy; and supplying energy in the form of drive signals, and/or energy supplied by a suitable heat source, to the lengths of shape memory alloy wire while measuring resistances of the lengths of shape memory alloy wire, wherein a closed-loop control loop controls the supplied energy in accordance with target signals representing a target position of the movable part with respect to the static part and feedback signals representing the measured resistances in respect of the lengths of shape memory alloy wire, wherein one or more signals in the closed-loop control loop is adjusted by an offset that is derived from the measured electrical characteristics and compensates for the slack of the lengths of shape memory alloy wire.

Thus, the method involves adjusting one or more signals in the closed-loop control loop by an offset. By deriving that offset from measured electrical characteristics, the offset may be chosen to compensate for the degrees of slack of the lengths of shape memory alloy wire. This is based on an appreciation that the degree of slack is represented by electrical characteristics experienced when the length of SMA wire is driven to contract from a slack state, in a similar manner to the first aspect of the present techniques.

When a length of SMA is driven from a slack state to contract, the temperature of the length of SMA wire is initially below the start of phase transition temperature. Thus, the initial heating causes the resistance to increase as the resistivity of the SMA material increases. As the length of SMA wire reaches the phase transition temperature it changes phase from a Martensitic state to an Austenitic state, resulting in a reduction in resistivity. This causes a reduction in length and an increase in area. These factors combined cause a maximum resistance to be experienced after which the resistance reduces. The resistance continues to reduce until the length of SMA wire experiences mechanical opposition, at which point a minimum resistance is experienced. Thus, varying degrees of slack of the length of SMA wire in the initial slack state, cause varying characteristics of the resistance and other electrical characteristics.

The electrical characteristics that are measured may be the resistances of the lengths of shape memory alloy wire. This is convenient, because the feedback signals represent the measured resistances and so this simplifies the derivation of the offset.

Advantageously, the offset may be derived from the resistances of the lengths of shape memory alloy wire measured when the lengths of shape memory alloy wire are at ambient temperature, for example when the initial drive signals, or energy supplied by a suitable heat source, are first supplied to the lengths of shape memory alloy wire. This provides a measure of slack from a measurement that may be taken very quickly as it is not necessary to drive the lengths of SMA wire through a complete movement cycle.

The method may be applied to various different types of control loop, some examples of which are as follows.

The target signals may represent the target position in respect of the one or more degrees of freedom.

In that case, the closed-loop control loop may comprise: a feedback transform block arranged to transform the feedback signals to represent resistance measures in respect of the one or more degrees of freedom; an error detector arranged to detect error signals in respect of the one or more degrees of freedom representing errors between the target signals and the feedback signals after being transformed; and a controller arranged to control the energy supplied on the basis of the error signals. This is an example of a closed-loop control loop that provides control within a "space" of the one or more degrees of freedom of the movement. In that case, any of the feedback signals before being transformed, the feedback signals after being transformed, the target signals, or the error signals may be adjusted by the offset.

As an alternative where the target signals represent the target position in respect of the one or more degrees of freedom, the closed-loop control loop may comprise: a target transform block arranged to transform the target signals to represent the target position in respect of the lengths of shape memory alloy wire; an error detector arranged to detect error signals in respect of the lengths of shape memory alloy wire representing errors between the target signals after being transformed and the feedback signals; and a controller arranged to control the energy supplied on the basis of the error signals. This is an example of a closed-loop control loop that provides control within a "space" of the lengths of SMA wire. In that case, any of the feedback signals, the target signals before being transformed, the target signals after being transformed, or the error signals may be adjusted by the offset.

As another alternative, the target signals may represent the target position in respect of the lengths of shape memory alloy wire.

In that case, the closed-loop control loop may comprise: an error detector arranged to detect error signals in respect of the lengths of shape memory alloy wire representing errors between the target signals and the feedback signals; and a controller arranged to control the energy supplied on the basis of the transformed error signals. This is another example of a closed-loop control loop that provides control within a "space" of the lengths of SMA wire. In that case, any of the feedback signals, the target signals, or the error signals may be adjusted by the offset.

Further according to the second aspect of the present techniques, there is provided a control circuit which implements a method similar to that described above. The control circuit may be provided as part of an SMA actuator assembly.

Both the aspects of the present techniques may be applied to an optical assembly in which the movable part is a lens element comprising at least one lens, which may have a diameter of at most 20mm, preferably at most 15mm, preferably at most 10mm. When the movable part is a lens element, the static part may optionally mount an image sensor on which the lens element is arranged to focus an image.

In other alternatives, the SMA actuator assembly may be an optical assembly wherein the movable part is an optical element other than a lens element, for example a diffractive optical element, a filter, a prism, a mirror, a reflective optical element, a polarising optical element, a dielectric mirror, a metallic mirror, a beam splitter, a grid, a patterned plate, or a grating, which may be a diffraction grating.

More generally, the present techniques may in general be applied to any type of device that comprises a static part and a moveable part which is moveable with respect to the static part. By way of non-limitative example, the actuator assembly may be, or may be provided in, any one of the following devices: a smartphone, a camera, a foldable smartphone, a foldable smartphone camera, a foldable consumer electronics device, an image capture device, a 3D sensing device or system, a servomotor, a consumer electronic device, a mobile computing device, a mobile electronic device, a laptop, a tablet computing device, an e-reader (also known as an e-book reader or e-book device), a computing accessory or computing peripheral device (e.g. mouse, keyboard, headphones, earphones, earbuds, etc.), a security system, a gaming system, a gaming accessory (e.g. controller, headset, a wearable controller, etc.), an augmented reality system, an augmented reality device, a virtual reality system, a virtual reality device, a wearable device (e.g. a watch, a smartwatch, a fitness tracker, etc.), a drone (aerial, water, underwater, etc.), an aircraft, a spacecraft, a submersible vessel, a vehicle, and an autonomous vehicle. It will be understood that this is a non-exhaustive list of example devices.

SMA actuator assemblies as described herein may be used in devices/systems suitable for image capture, 3D sensing, depth mapping, aerial surveying, terrestrial surveying, surveying in or from space, hydrographic surveying, underwater surveying, scene detection, collision warning, security, facial recognition, augmented and/or virtual reality, advanced driver-assistance systems in vehicles, autonomous vehicles, gaming, gesture control/recognition, robotic devices, robotic device control, touchless technology, home automation, medical devices, and haptics.

To allow better understanding, embodiments of the present techniques will now be described by way of non-limitative example with reference to the accompanying drawings, in which:

Fig. 1 is a diagram of an apparatus for measuring the degree of slack of a length of SMA wire;

Fig. 2 is a flow chart of a method of measuring the degree of slack;

Fig. 3 is a graph of resistance against temperature of a length of SMA wire;

Figs. 4 and 5 are schematic diagrams of types of assembly in which the length of SMA wire may be held;

Fig. 6A is a schematic diagram of an assembly in which plural length of SMA wire may be held;

Figs. 6B and 6C are schematic diagrams of an assembly in which plural length of SMA wire may be held, wherein the SMA wires are respective in an energised and an energised state;

Fig. 6D is a plot of electrical resistance in two SMA wires measured during the initial energisation of the assembly of Figs. 6B and 6C.

Fig. 7 is a top view of an SMA sub-assembly comprising a single body portion;

Figs. 8 and 9 are perspective views of the crimp portion in partly and fully crimped states;

Figs. 10 and 11 are perspective views of SMA actuator assemblies which are cameras;

Fig. 12 is a plan view of an SMA actuator assembly including four lengths of SMA wire;

Figs. 13 and 14 are diagrams of two alternative forms of a control circuit which may be used to control the SMA actuator assembly of Fig. 12;

Fig. 15 is a flow chart of a method controlling an SMA actuator assembly; and

Fig. 16 is a diagram of an adder used to supply an offset in the control circuits of Figs. 14 and 15.

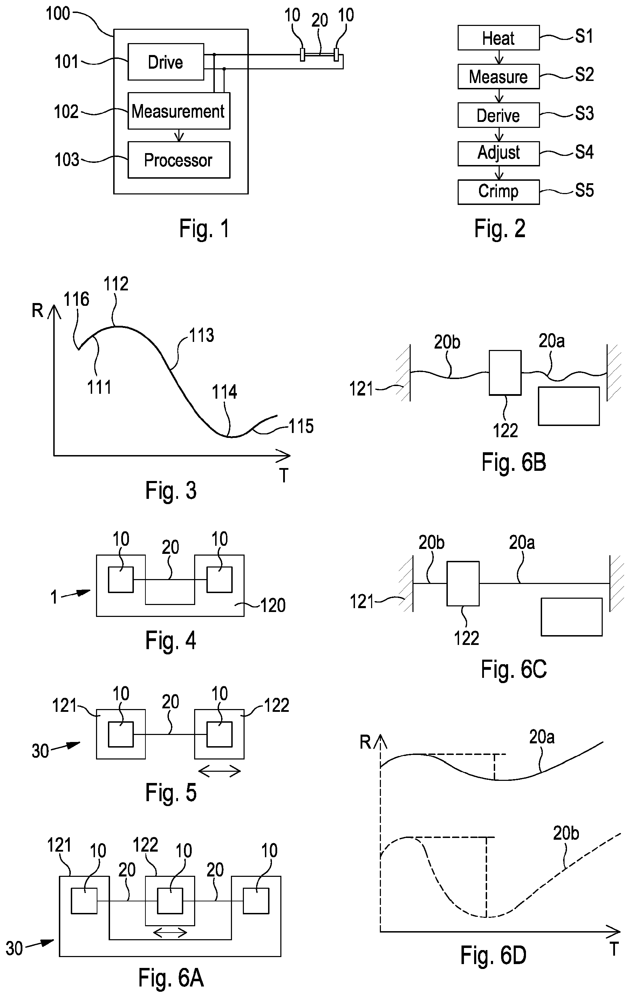

Fig. 1 shows an apparatus 100 that performs a method of measuring the degree of slack of a length of SMA wire 20 which is held slack. Fig. 1 illustrates a single length of SMA wire 20 for ease of description, but the apparatus 100 may alternatively be connected to plural lengths of SMA wire 20.

The apparatus 100 may be used during a manufacturing process of an SMA actuator assembly 30, examples of which are described below. The method may be applied at any stage of that manufacturing process in which the length of SMA wire 20 is held slack. Examples where the length of SMA wire 20 is held slack and the apparatus 100 may be used are described below, and typically involve the length of SMA wire being held by connection portions that take the form of crimp portions 10 crimped around the length of SMA wire 20. However, these examples are non-limitative and the apparatus and method are generally applicable to one or more lengths of SMA wire 20 being held slack in any assembly or sub-assembly.

The apparatus 100 may be a test circuit that is connected to the length of SMA wire 20 for the specific purpose of performing the method, or may be implemented by functionality of a control circuit that is connected to the length of SMA wire 20 for the purpose of driving in normal use.

The apparatus 100 is arranged as follows.

The apparatus 100 includes a drive circuit 101 that is connected to the length of SMA wire. The drive circuit 101 applies a signal to the length of SMA wire 20. In some cases, the signal is a drive signal that is sufficient to cause contraction of the at least one length of shape memory alloy wire. In other cases, the signal may be a test signal used to measure resistance of the SMA wire 20. Such a test signal may be of insufficient power to significantly heat the SMA wire 20.

The drive circuit 101 may be a constant-voltage current source or a constant-current current source. For example, in the latter case the constant current might be of the order of 120mA. dDrive signals may take any suitable form, for example being continuous signals or pulse-width modulation (PWM) signals.

The apparatus 100 also includes a measurement circuit 102 that measures an electrical characteristic of the length of SMA wire 20. The electrical characteristic may be the resistance of the length of SMA wire 20. In the case that the drive circuit 101 is a constant-current current source, the detection circuit 102 may be a voltage detection circuit operable to detect the voltage across the length of SMA wire 20 as a measure of its resistance. In the case that the drive circuit 101 is a constant-voltage current source, the detection circuit 102 may be a current detection circuit operable to current through the length of SMA wire 20 as a measure of its resistance. For a higher degree of accuracy, the detection circuit 102 may comprise a voltage detection circuit and a current detection circuit operable to detect both the voltage and current across each length of SMA wire and to derive a measure of resistance $R_n$ as the ratio thereof. Whichever measure of resistance is detected, the measured resistance is represented by an output signal from the measurement circuit 102 which may in general be a digital signal or an analog signal that may be subsequently converted into a digital signal.

The apparatus 100 also includes a processor 103 that receives the electrical characteristic measured by the measurement circuit 102. The processor 103 executes a program that is configured to derive a measure of the degree of slack of the length of SMA wire 20 from the measured electrical characteristic, as described in more detail below.

In operation, the apparatus 100 is used to perform a method of detecting the degree of slack of the length of SMA wire 20. The method is shown in Fig. 2 and performed as follows.

In step S1, the length of SMA wire is heated to cause contraction of the length of SMA wire 20. This may be done in any suitable way.

In a first option, step S1 is performed by operating the drive circuit 101 to apply a drive signal to the SMA wire 20 that heats the SMA wire 20 sufficiently to cause said contraction. The drive signal may increase in power over time to increase the temperature of the length of SMA wire 20 from its initial state in which it is not contracted to a state at which contraction ceases due to mechanical resistance experienced by the length of SMA wire 20.

In a second option, step S1 is performed by externally heating the SMA wire 20. The external heating may be provided by any suitable means, for example placing the SMA wire 20 in a hot environment such as an oven, placing the SMA wire 20 on a hot plate, or laser-heating, etc.

In step S2, measurement circuit 102 measures the electrical characteristic, for example resistance, of the length of SMA wire 20 during the contraction of the length of SMA wire 20 caused by the heating in step S1.

In the first option for step S1 where heating is performed by operating the drive circuit 101 to apply a drive signal, the measurements in step S2 may be derived from the drive signal while it is supplied (for example during the pulses of a PWM signal), or from a test signal that is additionally supplied.

In the second option for step S1 where heating is performed by external heating, step S2 may be performed by applying a test signal and deriving the measurements from the test signal while it is supplied.

In step S3, the processor 103 derives the measure of the degree of slack of the length of SMA wire 20 from the electrical characteristic measured in step S2.

Where the measured electrical characteristic is resistance, the measure of the degree of slack may be (a) the maximum resistance as the at least one length of shape memory alloy wire starts to contract, (b) the minimum resistance as the at least one length of shape memory alloy wire ceases to contract, (c) the difference between the maximum resistance as the at least one length of shape memory alloy wire starts to contract and the minimum resistance as the at least one length of shape memory alloy wire ceases to contract, which achieves additional accuracy, or (d) the difference between the resistances at two predetermined temperatures either side of the phase transition temperature.

These are good measures of the degree of slack of the length of SMA wire 20 for the following reasons. For illustration, Fig. 3 shows how the resistance of the length of SMA wire 20 changes with temperature as the drive signal is applied from a cold state.

At ambient temperature, the length of SMA wire 20 has an initial resistance 116. When the length of SMA wire 20 is driven from a slack state to contract, the temperature of the length of SMA wire 20 is initially below the start of phase transition temperature (this being a typical property of alloys used as SMA actuators). Thus, they must be heated in order to take up the slack in the system and reach the operating point of the actuator. The initial heating causes the resistance of the length of SMA wire 20 to increase as the resistivity of the SMA material increases. This is illustrated by portion 111 of the curve. There is also some thermal expansion, but the resistivity change dominates the change in resistance.

As the length of SMA wire 20 reaches the phase transition temperature, it changes phase from a Martensitic state to an Austenitic state, resulting in a reduction in resistivity. This causes a reduction in length and an increase in area. These factors combined cause a maximum resistance 112 to occur. After that, the resistance reduces, as illustrated by portion 113 of the curve.

The resistance continues to reduce until the length of SMA wire experiences mechanical resistance. At that point, a minimum resistance 114 is experienced. After that the resistances increases, as illustrated by portion 115 of the curve. A similar minimum resistance would occur if the length of SMA wire fully transitioned to an Austenitic state, but in a practical actuator assembly the length of SMA wire 20 is configured so that mechanical resistance is encountered first, for example from an opposing length of SMA wire. If a resilient biasing element such as a spring is provided, the mechanical resistance would cause a change in gradient of curve of resistance against temperature. This might not result in a minimum resistance unless the resilient biasing element, but in that case the change in gradient could be used instead of the minimum resistance.

The degree of slack of the length of SMA wire 20 in the initial slack state affects both the magnitude of the maximum resistance 112, and the magnitude of the minimum resistance 114. Specifically, as the degree of slack increases, the magnitude of the maximum resistance 112 increases and the magnitude of the minimum resistance 114 decreases.

The increase in the magnitude of the maximum resistance 112 can be understood as the length of SMA wire 20 undergoing a greater change in resistivity before transition, with increasing initial slack.

The decrease in the magnitude of the minimum resistance 114 can be understood as the length of SMA wire 20 undergoing a greater change in both resistivity and length, with increasing initial slack.

These effects may be understood as being related to the known fact that during normal driving the change in resistance of a length of SMA wire 20 is related to the change in length that SMA wire, although during such driving the length of SMA wire 20 is in tension and not slack. For example, use of the rate of change of resistance, current or another electrical characteristic may be used to assess whether the length of SMA wire 20 is in the phase transition.

Nonetheless, neither these specific measures nor the use of resistance is essential, Indeed, other measures of the degree of slack may be derived from the resistance or from other electrical characteristics based on similar considerations of the electro-mechanical properties of slack SMA wire that is subject to a drive signal which causes it to contract.

The measure may be a relative measure, as for example in the case of the measures which are resistances described above. Alternatively, the measure may be calibrated for a given SMA material, and initial diameter of the length of SMA wire 20.

Some examples of slack lengths of SMA wire 20 to which the apparatus 100 may be applied are as follows.

Fig. 4 illustrates an example of a sub-assembly 1 in which a length of SMA wire 20 is held slack between two connection portions in the form of crimp portions 10 that are crimped around the length of SMA wire 20. The crimp portions 10 are both mounted on a common part 120 and so hold the length of SMA wire 20 at fixed relative positions. In such a case, the minimum resistance is experienced when the length of SMA wire 20 ceases to contract because the slack has been taken up and the crimp portions 20 provide mechanical resistance against further contraction. The common part 120 provides a stiff mechanical harness, and so the resistance reaches a clear minimum as the tension is taken up.

The sub-assembly 1 may be adapted to hold plural lengths of SMA wire 20, each held slack between two connection portions mounted on the common part 120 to hold the length of SMA wire 20 at fixed relative positions. In that case, the apparatus 100 may measure the degree of slack of each length of SMA wire 20 simultaneously or in turn.

Fig. 5 illustrates an example of an SMA actuator assembly 30 wherein a single length of SMA wire 20 is held slack between two connection portions in the form of crimp portions 10 that are crimped around the length of SMA wire 20. The crimp portions 10 are mounted, respectively, on a static part 121 and a movable part 122 that is movable with respect to the static part 121 so that the length of SMA wire 20 is held between the static part 121 and the movable part 122, although as an alternative the crimp portions 20 could both be mounted on the static point 121 with the length of SMA wire 20 being connected to the static part 122 by being hooked over a hook feature on the movable part (or vice versa).

Fig. 6 illustrates an example of an SMA actuator assembly 30 similar to that of Fig. 5 except that two lengths of SMA wire 20 are present but each connected in the same manner so that they are held slack between the static part 121 and the movable part 122. In this example, the lengths of SMA wire 20 are opposed and so drive movement of the movable part 122 in opposite directions. In use, as each of the SMA wires 20 contract until they become tensioned against one another, after that motion is achieved by allowing one or more of the lengths of SMA wire 20 to elongate, being extended by one or more of the other lengths of SMA wire 20.

Although the opposed lengths of SMA wire 20 are shown parallel to the movement direction in Fig. 6 for simplicity, in practice the lengths of SMA wire 20 may be inclined with respect to the movement direction to increase the gain. Moreover, the example of Fig. 6 may be modified to include any plural number of lengths of SMA wire 20 in any geometrical configuration.

In the examples of Figs. 5 and 6, steps S1 and S2 may be performed while holding the movable part 122 in a fixed position relative to the static part 121. In such a case, the minimum resistance is experienced when the length of SMA wire 20 ceases to contract because the slack has been taken up and mechanical resistance against further contraction is provided by the means holding the movable part 122.

Alternatively, in the example of Fig. 6, steps S1 and S2 may be performed while allowing the movable part 122 to move relative to the static part 121. In such a case, the minimum resistance of each length of SMA wire 20 is experienced when the lengths of SMA wire 20 cease to contract because the slack has been taken up and the lengths of SMA wire 20 provide mechanical resistance to each other against further contraction.

In respect of lengths of SMA wires that are opposed, a measure of the degree of slack may be derived in respect of the opposed SMA wires individually, differentially or together. As each of the SMA wires 20 contract until they become tensioned against one another, after that motion is achieved by allowing one or more of the wires to elongate, being stretched out by one or more of the other wires in the system. In order to reach the initial tensioned state, the wires must all first contract from their cold states. In such cases, measures that are summed (or similarly averaged) across opposed lengths of SMA wire 20 can be taken as a measure of the amount of slack in the overall system.

In examples like this where plural lengths of SMA wire 20 are held slack between the static part 121 and the movable part 122, the degree of slack on each length of SMA wire is dependent on the position of the movable part 122 relative to the static part 121. This means that the points at which minimum resistance 114 is assessed is chosen to be the same for all the lengths of SMA wire 20.

Figures 6B, 6C and 6D further illustrate this feature. Upon applying power to each SMA wire, the SMA wires 20a, 20b contract until they oppose one another. As described, the resistance in each of the wires 20a, 20b initially increases due to an increasing temperature. As the contraction begins the resistances start to decrease until the SMA wires 20a, 20b start to oppose one another. From this point on, the resistances of the SMA wires 20a, 20b start to increase.

Depending on the usage history of the actuator, its orientation or other factors that may influence the operation of SMA wires 20a, 20b, the rate of contraction in each SMA wires 20a, 20b of the system may be different. As such the actuator position at which the slack is taken up, e.g. when the wires are sufficiently tensioned, may vary.

As shown in Figure 6B, 6C, and 6D, the same amount of power is supplied to a pair of SMA wires 20a, 20b. The first SMA wire 20a is arranged to be in series connection with a parasitic resistance, or it is adjacent to an object which reduces its rise in temperature in comparison to the second SMA wire 20b. As shown in Figure 6D, a higher level of resistance may initially be measured in the first SMA wire 20a due to the parasitic resistance (see curve 220a). As power supply increases, the first SMA wire 20a may reduce at a lower rate, or by a lesser amount, in comparison with the SMA wire 20b (see curve 220b) that is free of parasitic resistance. At a first glance, it appears from Figure 6D that the first SMA wire 20a has a lower degree of slack, e.g. there is a smaller difference between the maxima and the minima in its measured resistance compared to that of the second SMA wire 20b. However, the root cause of the smaller difference is in fact due to the first SMA wire 20a having less contraction when a given power is supplied. If the system is to perform optimally, then all the SMA wires 20a, 20b in an actuator must be at the same distance from their limits at the actuator centre position.

Therefore, the total amount of slack in the actuator may be applied as a metric related to the total reduction in resistance in all SMA wires 20. Likewise, the average reduction in resistance corresponds to the average slack in the actuator. Both the total and average amount of slack can be used to monitor manufacturing processes in situations where a metric applied per wire does not relate solely to slack, but also to the actuator position when the metric was obtained.

As shown in Figure 6D, the difference between the resistance decreases determined from the two wires may correspond to the difference in the available stroke of those wires before they become slack. This allows the actuator to be put into a position centred between where the SMA wires have respectively reach their maximum extensions. As such, it is possible to apply an offset to the definition of the centre position, thereby allowing all the SMA wires to contract by the same amount during start up, i.e. the resistance in all the SMA wires may be reduced by the same degree during start-up. Optionally, based on the offset, the movable part may be placed at a centre position, wherein at the centre position the amount of contraction in the plural lengths of smart memory alloy wire, upon receiving the respective drive signals, are substantially the same.

The power supply to each of the SMA wire may be any suitable power supply known to the skilled person, for example, a suitable current source and/or linearized driver (CLIN).

In contrast to a single SMA wire actuator shown in Figure 5, where the wire length is fixed by a mechanical constraint, a plural or opposing SMA wires actuator may have its centre position defined at a position where the total slack taken up across all wires matches the mechanical constraint.

In principle, it is possible that different lengths of SMA wire 20 reach the transition temperature at different points in time, for example, if they are being heated quickly and are in different thermal environments, or they are being heated by, for example, supplying different drive signals. In this case the individual maximum resistances 112 may be assessed in order to ensure use of the correct starting point for each length of SMA wire 20. If the points are significantly different, the rate of change, and so the absolute temperature, of each length of SMA wire 20 can be inferred from the point at which the phase transition is seen to start as this is proportional to the temperature of the length of SMA wire 20. However, many designs of SMA actuator assembly 30 use lengths of SMA wire 20 of the same nominal length and slack, and parts are generally assembled and tested in a controlled temperature environment, which reduces this issue.

In one advantageous case using resistance as the measured electrical characteristic, a measure of the degree of slack derived in respect of each of the plural lengths of SMA wire 20 is the difference between the resistance of the length of SMA wire 20 wire prior to supplying the drive signal and the resistance of the length of SMA wire 20 when all of the plural lengths of SMA wire 20 have come into tension. This simplifies the measurement as there is no need to evaluate maxima and minima. This approach allows for rapid measurement as resistance need only be measured at the beginning and end of the heating.

Typically, reaching operating point is achieved by supplying a similar drive signal to each length of SMA wire 20, pre-calibrated to ensure the lengths of SMA wire 20 are in tension. The difference in mean resistance of the lengths of SMA wire 10 between the initial slack state and the final tensioned state incorporates the increase in resistance caused by heating to the start of the phase transition. This is similar for each length of SMA wire 20 if made of the same SMA material.

From this point, the phase transition and contraction causes each length of SMA wire 20 to reduce in resistance until the lengths of SMA wire 20 come into tension. Thus this method adds an offset to assessing individual maximum resistances, which is dependent on the initial ambient temperature. If this initial ambient temperature is not controlled, but is known, then the offset can be calibrated and the method employing in an environment with uncontrolled, but measured temperature, provided the temperature is below the phase transition start of the actuator material.

Variation in the initial temperature is one effect that cannot be compensated for. In some materials, there is significant hysteresis in phase with temperature, which can cause differences in behaviour as between heating and cooling. If each length of SMA wire 20 and its surroundings have the same thermal history and start in a controlled temperature environment then this is not a concern. However, if the initial thermal environment is not well controlled and the measurement is made at turn-off rather than turn-on then hysteresis can cause variation in the metric.

Where there is a chance of the movable part 122 or length of SMA wire 20 snagging, causing resistance to be prematurely encountered, then it is preferable to perform the test at turn-off when motion of the movable part 122 is likely to have freed off the initial snag. If the actuator has been operated solely between a maximum and minimum temperature which are achieved in this test, then off and on change will be interchangeable.

The method provides an accurate measure of the degree of slack that is capable of being performed very quickly, making it suitable for application at any stage in the manufacturing process in a mass production environment, including as an end-of-line inspection to verify correct assembly manufactured of SMA actuator assemblies.

In some applications of the method, for example for quality control of a manufactured product, the measure of the degree of slack of the length of SMA wire 20 is output as data, for example for display or storage. In that case, the following steps of the method may be omitted.

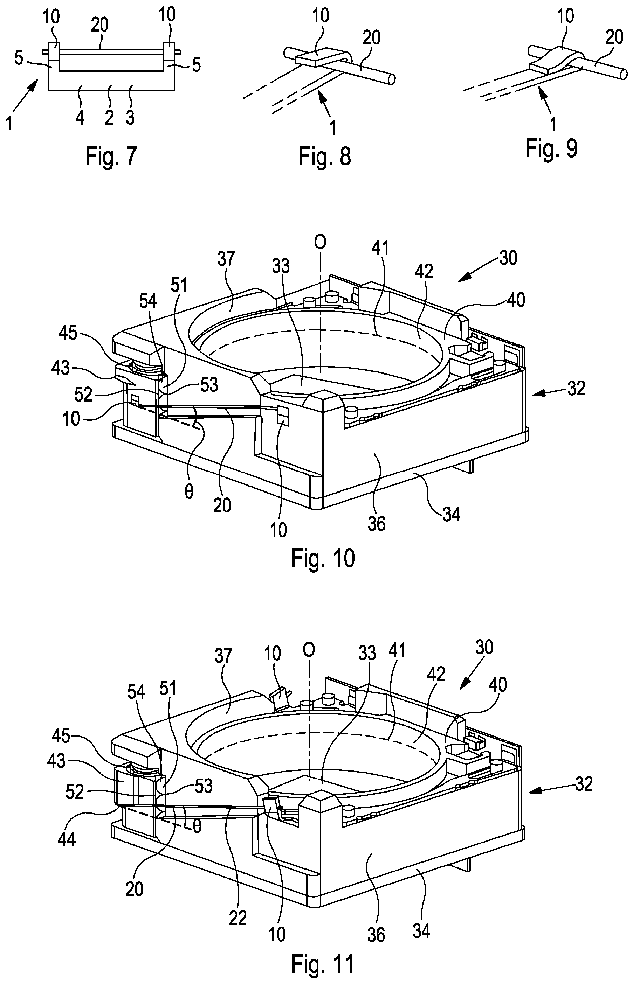

In other applications of the method, the measure of the degree of slack of the length of SMA wire 20 is used to control the manufacturing process, for example by performing steps S4 and S5. In this case, the crimp portions 10 are partly crimped around the length of SMA wire 20 as shown in Fig. 7 and described below. As such, the crimp portions 10 hold the length of SMA wire 20 with a compressive force that is sufficiently low to allow the length of SMA wire 20 to be moved along its length to vary the degree of slack.

In step S4, a force is applied along the length of the length of SMA wire 20 to adjust the degree of slack in the length of SMA wire 20.

In step S5, the crimp portions 10 are completely crimped around the length of SMA wire 20. As such, the crimp portions 10 hold the length of SMA wire 20 with a compressive force that is sufficiently high to resist the tension developed in the length of SMA wire 20 under application of drive signals in normal use.

Step S5 may be done using a conventional crimp tool. Thus the crimp portions 10 hold the length of SMA wire 20 in a state in which it is slack between the crimp portions 10. The body portion 3 of the SMA sub-assembly 1 holds the crimp portions 10 and maintains the length of the length of SMA wire 20 when it is subsequently tensioned, as described below.

There will now be described some products including a length of SMA wire 20 and to which the present method may be applied. These products are described by way of non-limitative example.

Fig. 7 shows an SMA sub-assembly 1 comprising a fret 2 including a body portion 3. The fret 2 is formed from a sheet of material as a flat strip. The material of the fret 2 may be metal, for example phosphor bronze, steel or laminate containing conductive components.

The fret 2 also comprises a pair of crimp portions 10 formed integrally with the body portion 3 from the same sheet of material. In particular, the body portion 3 comprises an elongate portion 4 and laterally protruding arms 5 at the extremes of the elongate portion 4, the crimp portions 10 being formed by tabs on the ends of the arms 5. Thus, the crimp portions 10 are held apart by the body portion 4.

The SMA sub-assembly 1 may have a similar construction and arrangement to the fret disclosed in WO2016/189314.

The crimp portions 10 are partly or fully crimped around a length of SMA wire 20, so that they hold the length of SMA wire 20. The crimp portions 10 therefore crimp the length of SMA wire 20 to provide both mechanical and electrical connection.

In contrast to WO2016/189314 wherein the length of SMA wire is under tension in the fret, the length of SMA wire 20 is slack, the term "slack" being used herein with its normal meaning that the length of SMA wire is has zero tension. The length of SMA wire 20 may be made of any suitable SMA material, for example Nitinol or another Titanium-alloy SMA material

The body portion 3 is sacrificial and is removable from the crimp portions 10, for example by mechanical or laser cutting.

The crimp portions 10 may be partly crimped around the length of SMA wire 20 as shown in Fig. 8. In that case, the crimp portions 10 hold the length of SMA wire 20 with a compressive force that is sufficiently low to allow the length of SMA wire 20 to be moved along its length to vary the degree of slack or introduce tension.

Alternatively, the crimp portions 10 may be fully crimped around the length of SMA wire 20 as shown in Fig. 9. In that case, the crimp portions 10 hold the length of SMA wire 20 with a compressive force that is sufficiently high to resist the tension developed in the length of SMA wire 20 under application of drive signals in normal use.

Fig. 10 shows an example of an SMA actuator assembly 30 which is a camera arranged as follows.

The SMA actuator assembly 30 comprises a static part 121 that has an image sensor 33 mounted thereon. The static part 121 includes a base 34 which is a rigid plate. The image sensor 33 is fixed to the front side of the base 34. The static part 121 also includes a chassis 36 that protrudes from the base 4 and may be a moulded component. The chassis 36 has a central aperture 37 aligned with the image sensor 33.

The SMA actuator assembly 30 further comprises a lens element 122 positioned in the aperture 37 and comprising a lens carriage 42 which holds a lens 41, although alternatively plural lenses may be present. The lens 41 may be made of glass or plastic. The SMA actuator assembly 30 is a miniature optical device in which the lens 41 has a diameter of at most 20 mm, preferably at most 15 mm, more preferably at most 10 mm.

The lens element 122 has an optical axis O aligned with the image sensor 33 and is arranged to focus an image on the image sensor 33. The lens element 122 also has a protrusion 43 that is formed on one side protruding laterally of the optical axis O.

The SMA actuator assembly 30 also comprises a suspension system 50 that supports the lens element 122 on the static part 121. The suspension system 30 is configured to guide movement of the lens element 122 with respect to the static part 121 along the optical axis O, while constraining movement of the lens element 122 with respect to the static part 121 in other degrees of freedom. Such relative movement of the lens element 122 changes the focus of the image on the image sensor 33, for example for providing autofocus or zoom. Accordingly, in this example the static part 121 is a static part and the lens element 122 is a movable part that is movable with respect to the static part 121 along the optical axis O to. The terms "static" and "movable" refer to that relative motion.

In this example, the suspension system 50 comprises a bearing arrangement comprising plural rolling bearings 51. Each of the rolling bearings 51 comprises a bearing surface 52 on the static part 121, in particular on the chassis 36, and a bearing surface 53 on the lens element 122, in particular on the lens carriage 42. Each of the rolling bearings 51 also comprises balls 54 disposed between the bearing surfaces 52 and 53. The balls 54 therefore act as rolling bearing elements, although as an alternative other types of rolling bearing element could be used, for example a roller.

As an alternative, the rolling bearings 51 may be replaced by plain bearings comprising bearing surfaces on each of the static part 121 and the lens element 122 that conform and bear on each other to guide the relative movement.

More generally, the term "suspension system" may refer to a bearing or arrangement of bearings. Except where the context requires otherwise, the term "bearing" is used herein as follows. The term "bearing" is used herein to encompass the terms "sliding bearing", "plain bearing", "rolling bearing", "ball bearing", "roller bearing" and "flexure". The term "bearing" is used herein to generally mean any element or combination of elements that functions to constrain motion to only the desired motion and reduce friction between moving parts. The term "sliding bearing" is used to mean a bearing in which a bearing element slides on a bearing surface, and includes a "plain bearing". The term "rolling bearing" is used to mean a bearing in which a rolling bearing element, for example a ball or roller, rolls on a bearing surface. In embodiments, the bearing may be provided on, or may comprise, non-linear bearing surfaces.

In some embodiments of the present techniques, more than one type of bearing element may be used in combination to provide the bearing functionality. Accordingly, the term "bearing" used herein includes any combination of, for example, plain bearings, ball bearings, roller bearings and flexures.

The SMA actuator assembly 30 also comprises two lengths of SMA wire 20 (one of which is visible in Fig. 10 that are arranged as follows to drive movement of the lens element 122 along the optical axis O. Each length of SMA wire 20 is connected to the static part 121 at one end and to the lens element 122 at the other end by crimp portions 10 (which are the crimp portions 10 of an SMA sub-assembly as described in more detail below).

The lengths of SMA wire 20 have an angled-V arrangement of a similar type to that disclosed in WO2007/113478. That is, each length of SMA wire 20 is inclined in the same sense and at the same acute angle $\theta$ with respect to a plane normal to the optical axis O which is the movement direction in this example. The angle $\theta$ is selected to provide gain between the change in length of the length of SMA wire 20 and the movement along the optical axis O, while also reducing the height projected along the optical axis, typically being in a range from a lower limit of 5 degrees, or more preferably 8 degrees, to an upper limit of 20 degrees, preferably 15 degrees, or more preferably 12 degrees, with respect to a plane normal to the optical axis O. The lengths of SMA wire 20 also have an angle therebetween of 90 degrees as viewed along the optical axis O which is the movement direction in this example.

In an alternative, simpler arrangement, one of the lengths of SMA wire 20 may be omitted.

The SMA actuator assembly 30 further comprises a compression spring 45 that is connected between the base 34 of the static part 121 and the lens element 122 and acts a resilient biasing element for the lengths of SMA wire 20. Thus, when the lengths of SMA wire 20 cool, the compression spring 45 drives movement along the optical axis O in the opposite direction (downwards in Fig. 10). As a result, the temperature of the length of SMA wire 20 and hence the position of the lens element 122 along the optical axis O can be controlled by control of the power of the drive signals.

The length of SMA wire 20 are arranged to be slack in the absence of a drive signal being supplied thereto. It has been appreciated by experiment and analysis that it is not necessary to hold the lengths of SMA wire 20 in tension in the unpowered state. The length of SMA wire 20 is however configured so that a tension suitable for driving the SMA actuator assembly 30 may be applied to the length of SMA wire by application of suitable drive signals to heat the wire and cause it to contract. This may be achieved by controlling the degree of slack in the length of SMA wire 20.

In addition, such a case of slack length of SMA wire in the unpowered state provides significant advantages. If a length of SMA wire is under tension in the unpowered state, then the SMA actuator assembly typically loses a large amount of its theoretical stroke, for example of the order of $50\mu m$ to $100\mu m$ in typical optical device. This is significant because the achievable stroke is often be a limiting factor in miniaturisation of the SMA actuator assembly. On the other hand, by providing length of SMA wire 20 that are slack in the unpowered state, the length of the length of SMA wires 20 is increased, improving the stroke capability of the SMA actuator assembly 30, possibly up to its theoretical maximum.

A control circuit implemented in an IC chip (not shown) generates the drive signals and supplies them to the length of SMA wire 20, to which the control circuit is connected. The control circuit receives a target signal representing a target position of the lens element 122 along the optical axis O and generates drive signals having powers selected to drive the lens element 122 to the desired position. The power of the drive signals may be either linear or varied using pulse width modulation.

Fig. 11 shows an example of an SMA actuator assembly 30 which is a camera similar to that shown in Fig. 10 but with the following modification to provide an angled-V arrangement of the type disclosed in WO2007/113478. Instead of providing two lengths of SMA wire 20 that are separate pieces of SMA wire each connected by crimp portions 10 at each end as in Fig. 10, a single length of SMA wire 20 is connected at each end to the static part 121 by crimp portions 10 and is connected to the lens element 122 by being hooked over a hook feature 44 formed on the protrusion 43. As a result, the two parts of the length of SMA wire 20 on either side of the protrusion 43 form respective length of SMA wire 22 which have the same configuration, and hence the same function and operation, as the two length of SMA wire 20 in Fig. 10.

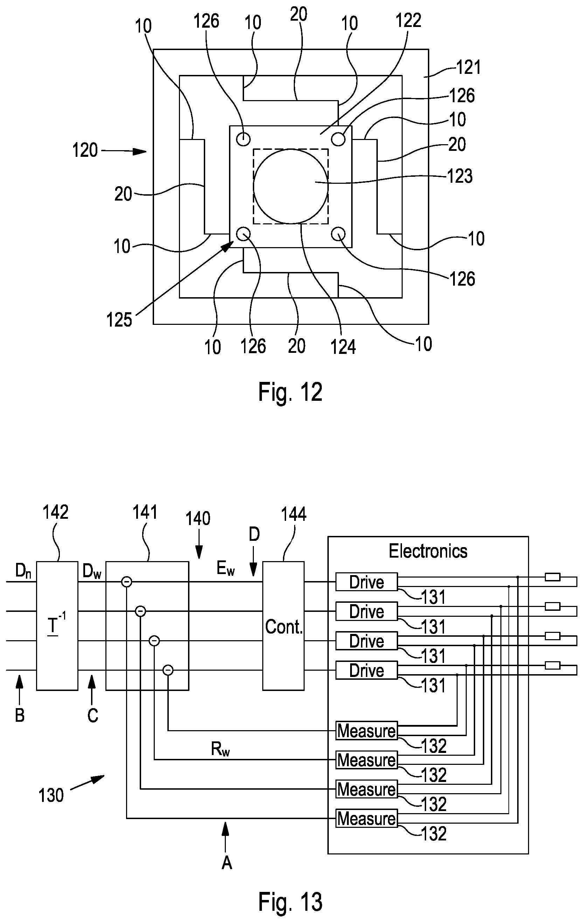

Fig. 12 illustrates an SMA actuator assembly 120 including four lengths of SMA wire 20, which is similar to those described in in WO2013/175197 and WO2014/083318. The SMA actuator assembly 120 is arranged as follows.

The SMA actuator assembly 120 includes a static part 121 and a lens element 122 comprising at least one lens 123 which is the movable part in this example. The lens 123 may be made of glass or plastic. The SMA actuator assembly 120 is a miniature optical device in which the lens 123 has a diameter of at most 20 mm, preferably at most 15 mm, more preferably at most 10 mm. The lens element 123 has an optical axis O aligned with an image sensor 124 fixed to the static part 121 and is arranged to focus an image on the image sensor 124.

The SMA actuator assembly 120 also comprises a suspension system 125 that supports the lens element 123 on the static part 121. In this example, the suspension system 125 comprises plural rolling bearings 126, which may have an arrangement as disclosed in WO2014/083318. The suspension system 125 is configured to guide movement of the lens element 122 with respect to the static part 121 perpendicular to the optical axis O and thus the movement has three degrees of freedom, i.e. two translational degrees of freedom perpendicular to the optical axis O and one rotational degree of freedom around the optical axis O. The terms "static" and "movable" refer to that relative motion.

The suspension system 125 constrains movement of the lens element 122 with respect to the static part 121 in other degrees of freedom, i.e. a translational degree of freedom along the optical axis O and two rotational degrees of freedom around axes orthogonal to the optical axis O. Such relative movement of the lens element 122 may be used to provide OIS.

However, suspension system 125 may have any other form to perform the same function, for example being formed by beams as disclosed in WO2013/175197 or by flexure bearings.

The SMA actuator assembly 120 also comprises four lengths of SMA wire 20. Each length of SMA wire 20 is connected to the static part 121 at one end and to the lens element 122 at the other end by crimp portions 10 (which are the crimp portions 10 of an SMA sub-assembly as described in more detail below).

The four lengths of SMA wire 20 are arranged as follows. The lengths of SMA wire 20 each extend perpendicular to the optical axis O, although as an alternative the lengths of SMA wire 20 may be arranged inclined at a non-zero angle to a plane perpendicular to the optical axis O, which angle is preferably small. The four lengths of SMA 20 are arranged along respective sides of the lens element 122, with one pair of lengths of SMA actuator wire 20 on opposite sides of the lens element 122 perpendicular to the other pair of lengths of SMA actuator wire 20 on opposite sides of the lens element 122.

Within each of those pairs of lengths of SMA actuator wire 20, the lengths of SMA wire 20 are opposed and so drive movement of the lens element 122 in opposite directions when drive signals are supplied. In use, within each pair, as each of the SMA wires 20 contract until they become tensioned against one another, after that motion is achieved by allowing one or more of the lengths of SMA wire 20 to elongate, being extended by one or more of the other lengths of SMA wire 20.

Thus, the two pairs of lengths of SMA actuator wire 20 each drive translational movement of the lens element 122 in one of two orthogonal directions perpendicular to the optical axis O on differential contraction. In addition, the two pairs of lengths of SMA actuator wire 20 each drive rotational movement of the lens element 122 around optical axis O on common contraction, but in opposite directions as between the pairs, so all four lengths of SMA actuator wire 20 drive rotational movement of the lens element 122 around optical axis O on differential contraction as between the pairs. Further details are explained in WO2014/083318.

Each length of SMA wire 20 are arranged to be slack in the absence of a drive signal being supplied thereto. It has been appreciated by experiment and analysis that it is not necessary to hold the lengths of SMA wire 20 in tension in the unpowered state. The length of SMA wire 20 is however configured so that a tension suitable for driving the SMA actuator assembly 120 may be applied to the length of SMA wire 20 by supply of suitable drive signals to heat the wire and cause it to contract. This may be achieved by controlling the degree of slack in the length of SMA wire 20.

In addition, such a case of slack length of SMA wire 20 in the unpowered state provides significant advantages. If a length of SMA wire is under tension in the unpowered state, then the SMA actuator assembly typically loses a large amount of its theoretical stroke, for example of the order of $50\mu$m to $100\mu$m in typical optical device. This is significant because the achievable stroke is often be a limiting factor in miniaturisation of the SMA actuator assembly. On the other hand, by providing length of SMA wire 20 that are slack in the unpowered state, the length of the length of SMA wires 20 is increased, improving the stroke capability of the SMA actuator assembly 120, possibly up to its theoretical maximum.

Although particular SMA actuator assemblies 30 and 120 are shown in Figs. 10, 11 and 12 as an example, the SMA sub-assembly 1 could be used to manufacture other types of SMA actuator assembly. In one alternative, the SMA actuator assembly may be a camera providing OIS of the type disclosed in WO2013/175197, or a camera providing both multiple functions of the type disclosed in WO2011/104518. In other alternatives, the SMA actuator assembly may be an optical device in which the movable element is a lens element but there is no image sensor. In other alternatives, the SMA actuator assembly may be an optical device wherein the movable part is an optical element other than a lens element. In other examples, SMA actuator assembly may be a type of device that is not an optical device and in which the movable element is not an optical element.

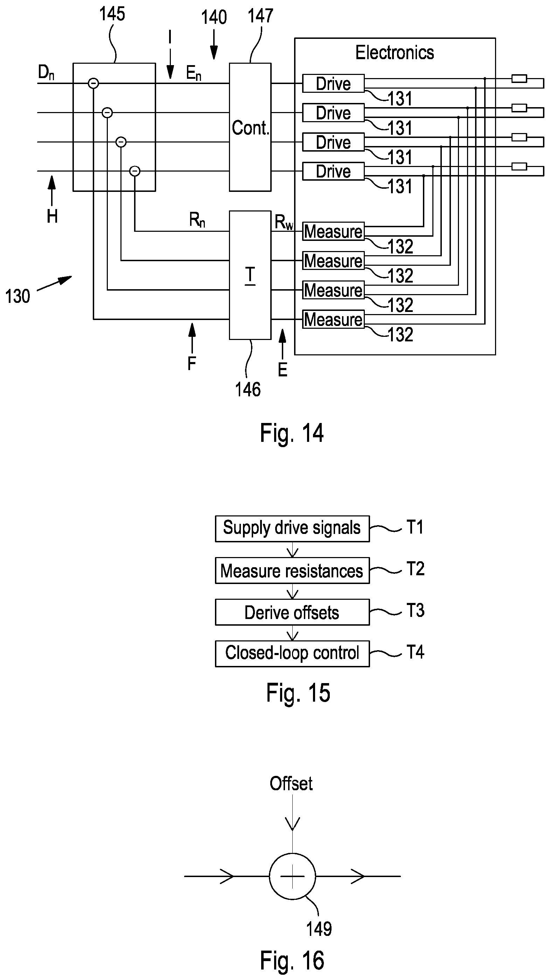

Figs. 13 and 14 illustrate two alternative forms of a control circuit 130 that may be used to control the SMA actuator assembly 120 shown in Fig. 12. In each case the control circuit 130 comprises the following.

The control circuit 130 includes driver circuits 131 connected to a respective length of SMA wire 20. Each driver circuit 131 generates a drive signal in accordance with a control signal and supplies the drive signal to the respective SMA wire 20. The driver circuits 131 may be a constant-voltage current sources or a constant-current current sources. For example, in the latter case the constant current might be of the order of 120mA.

The drive signals are pulse width modulation (PWM) drive signals. Thus, the control signals control the power of the drive signals by controlling the PWM duty cycle. The driver circuit 131 generate drive signals having a bias power that controls the average temperature of the SMA wires 20 in order to cause contraction and ensure they are all in tension. The control signals control the power of the drive signals relative to that bias power. The bias power may have a predetermined value or may be set in dependence on ambient temperature, as measured by an ambient temperature sensor (not shown).

The control circuit 130 also includes respective resistance measurement circuits 132 arranged to detect the resistance of a respective SMA wire 20. In the case that the driver circuits 131 are constant-current current sources, the resistance measurement circuits 132 may be a voltage resistance measurement circuit operable to detect the voltage across the SMA wire 20 which is a measure of the resistance thereof. In the case that the driver circuits 132 are constant-voltage current sources, the resistance measurement circuits 132 may be a current detection circuits operable to detect the voltages across the length of SMA wire 20 as a measure of its resistance. For a higher degree of accuracy the resistance measurement circuits 132 may each comprise a voltage detection circuit and a current detection circuit operable to detect both the voltage and current across the length of SMA wire 20 and to derive a measure of resistance as the ratio thereof. Whichever measure of resistance is detected, the measured resistance is represented by output signals from the resistance measurement circuits 132 which may in general be digital signals or analog signals that may be subsequently converted into a digital signal.

The control circuit further includes a closed-loop control loop 140 that controls the drive signals in accordance with target signals representing a target position for the lens element 122 with respect to the static part 121. The target signals represent the target position in respect of the degrees of freedom of the movement of the lens element 122, that is in degree of freedom space. Thus, in the example of the SMA actuator assembly 120 shown in Fig. 12, the target position of the lens element 122 is represented in the two translational and one rotational degree of freedom, for example as a position (x, y, θ).

The position of the lens element 122 may also be represented in wire space, being a position in respect of each length of SMA wire 20, for example $(l_1, l_2, l_3, l_4)$, where $l_n$ is the length of the n-th length of SMA wire 20. A transform **T** may be used to transform positions from wire space to degree of freedom space, **T$^{-1}$** being the inverse transform from degree of freedom space to wire space. In a simple example comprising two opposed co-linear lengths of SMA wire 20, the transform **T** is given by [1 -1] and simply represents the different between the lengths of the lengths of SMA wire 20. In the example of the SMA actuator assembly 120 shown in Fig. 12, the transform **T** is given by:

$$\mathbf{T} = \begin{bmatrix} 1 & -1 & 0 & 0 \\ 0 & 0 & 1 & -1 \\ 1 & 1 & -1 & -1 \end{bmatrix}$$

The closed-loop control loop 140 applies closed loop control using signals from the resistance measurement circuits 131 representing the measured resistances in respect of the lengths of SMA wire 20 as feedback signals.

The closed-loop control loop 140 may be arranged as follows. In general, the closed-loop control loop 140 may be implemented in analog or digital form, in which cases the signals discussed below are analog or digital signals, respectively.

Figs. 13 and 14 show two different forms of the closed-loop control loop 140. In Figs. 13 and 14, D represents the target signals, R represents the feedback signals and E represents error signals, with these signals in wire space being indicated by the subscript w and these signals in degree of freedom space being represented by subscript n. So the target signals in degree of freedom space are $D_n$ and so on.

In the form shown in Fig. 13, the closed-loop control loop 140 includes an error detector 141 that derives error signals $E_w$ in wire space. Thus, the feedback signals $R_w$ in wire space are supplied directly to the error detector 141, but the closed-loop control loop 140 includes a target transform block 142 that transforms the target signals in degree of freedom space $D_n$ by the transform $\mathbf{T}^{-1}$ into target signals in wire space $D_w$ that represent the target position in respect of the lengths of shape memory alloy wire 20. The target signals in wire space $D_w$ thus derived are supplied to the error detector 141. The error detector 141 detects error signals $E_w$ in respect of the lengths of SMA wire 20 representing errors between the target signals $D_w$ after being transformed and the feedback signals $R_w$ in wire space.

The error signals $E_w$ in wire space are supplied to a controller 144 which derives control signals on the basis thereof. The control signals are supplied to the driver circuits 131 so that the drive signals are controlled on the basis of the error signals $E_w$ in wire space.

The controller 144 may apply gains between the error signals $E_w$ and the power.

One option is to apply gains in each degree of freedom represented by a transform **G**. In that case, the controller 144 may therefore apply a transform $\mathbf{T}^{-1}\mathbf{G}\mathbf{T}$ to the error signals $E_w$ in wire space.

Another option is simply to apply a gain to each length of SMA wire 20, so that each error signal $E_w$ in wire space affects the power supplied to the corresponding length of SMA wire 20 only. That alone would be incorrect in total power, so when this option is applied the driver circuits 132 are controlled together to make the total power supplied to all the lengths of SMA wire 20 constant by scaling the power after the application of gain.

As an alternative, the closed-loop control loop 140 may receive target signals in wire space $D_w$ in which case the target transform block 142 is omitted.

In the form shown in Fig. 14, the closed-loop control loop 140 includes an error detector 145 that derives error signals $E_n$ in degree of freedom space. Thus, the target signals in degree of freedom space $D_n$ are supplied directly to the error detector 144, but the closed-loop control loop 140 includes a feedback transform block 146 that transforms the feedback signals $R_w$ in wire space by the transform **T** into feedback signals in degree of freedom space $R_n$ that represent the resistance measures in respect of the degrees of freedom. The feedback signals in degree of freedom space $R_n$ thus derived are supplied to the error detector 144. The error detector 144 detects error signals $E_n$ in respect of the degrees of freedom representing errors between the target signals in degree of freedom space $D_n$ and the feedback signals $R_n$ after being transformed.

The error signals $E_n$ in degree of freedom space are supplied to a controller 147 which derives control signals on the basis thereof. The control signals are supplied to the driver circuits 131 so that the drive signals are controlled on the basis of the error signals $E_n$ in degree of freedom space.

The controller 147 may apply gains between the error signals $E_n$ and the power.

One option is to apply gains in each degree of freedom represented by a transform **G**. In that case, the controller 147 may therefore apply a transform $\mathbf{T}^{-1}\mathbf{G}$ to the error signals $E_n$ in degree of freedom space.

Another option is simply to apply a gain to each length of SMA wire 20. That alone would be incorrect in total power, so when this option is applied the driver circuits 132 are controlled together to make the total power supplied to all the lengths of SMA wire 20 constant by scaling the power after the application of gain.

In Figs. 13 and 14, the feedback signals are signals from the resistance measurement circuits 132 that are the actual measured resistances, and so the target signals are equally in units of resistance. However, the feedback signals and target signals could be converted so long as they represent resistances. One possibility is to convert the feedback signals and target signals into units of length, because the lengths and resistances of the lengths of SMA wire 20 correspond to each other.

Fig. 15 illustrates a method of controlling the SMA actuator assembly 120 shown in Fig. 12. The method may equally be applied to other SMA actuator assemblies employing opposed lengths of SMA wire 20 that are slack in the absence of drive signals. The method is performed as follows. The method may be implemented by software executed by a processor 150 that forms part of the control circuit 130 and controls the other components thereof.

In step T1, the driver circuits 132 are controlled to initially supply drive signals. This causes contraction of the lengths of SMA wire 20 that removes the slack and brings them into tension against each other, prior to operation of the closed-loop control loop 140.

In step T2, while the drive signals in step T2, the resistance measurement circuits 132 measure the resistances of the lengths of SMA wire 20. As discussed below, those resistances depend on the degrees of slack of the lengths of SMA wire 20 in the absence of drive signals. Step T2 is performed while allowing the lens element 122 to move relative to the static part 121.

In step T3, offsets for the closed loop control loop 140 which compensate for the degrees of slack of the lengths of SMA wire 20 are derived from the measurements taken in step T1.

In a first option, the offsets are derived in step T3 from the resistances of the lengths of SMA wire 20 measured when the drive signals are first supplied, before the lengths of SMA wire 20 have had time to heat up, and so are measures of the resistance at ambient temperature. This is option is simple to implement.

In a second option, the offsets are derived in step T3 from another characteristic of the resistance that depends on the degrees of slack of the lengths of SMA wire 20 in the absence of drive signals, as the drive signals increase in power over time to increase the temperature of the length of SMA wire 20 from its initial state in which it is not contracted to a state at which the slack of all the lengths of SMA wire 20 is taken up and the lengths of SMA wire 20 are in tension against each other.

In step T4, the driver circuits 132 are controlled to supply drive signals under the control of the closed-loop control loop 140. However, signals in the closed-loop control are adjusted by the offset derived in step T3 to provide compensation for the degrees of slack of the lengths of SMA wire 20.

In step T4, the offsets may adjust various different signals within the closed-loop control loop 140 to provide the compensation.

With the form of the closed-loop control loop 140 shown in Fig. 13, the offsets may adjust any of the feedback signals $R_w$ (at point A), the target signals before being transformed $D_n$ (at point B), the target signals after being transformed $D_w$ (at point C), or the error signals $E_w$ (at point D). As the operations performed by the error detector 141 and target transform block 142 are linear, application of the offsets at these different points A to D have equivalent effect of providing compensation for the degrees of slack of the lengths of SMA wire 20, although the form of the offsets is calculated according to where they are applied.

With the form of the closed-loop control loop 140 shown in Fig. 14, the offsets may adjust any of the feedback signals before being transformed $R_w$ (at point E), the feedback signals after being transformed $R_n$ (at point F),

the target signals $D_n$ (at point H), or the error signals $E_n$ (at point I). As the operations performed by the error detector 145 and feedback transform block 146 are linear, application of the offsets at these different points A to D have equivalent effect of providing compensation for the degrees of slack of the lengths of SMA wire 20, although the form of the offsets is calculated according to where they are applied.

The offsets are implemented by providing an adder 149 as shown in Fig. 16 in the line for each of the signals at the one of the points A-F, H or I where the offsets are applied. The adder 149 adds the offset to the signal in question to adjust the signal.

The derivation of the offset in step T4 will now be discussed. As all of the lengths of SMA wire 10 are slack in their cold states in the absence of a drive signal, when drive signals are applied, they must each contract in order to remove that slack and reach the initial tensioned state. During that contraction, the resistances of the lengths of SMA wire 20 change as follows, with reference to Fig. 3 which shows how the resistance of the length of SMA wire 20 changes with temperature as the drive signal is applied from a cold state.

The initial heating causes the resistance of the lengths of SMA wire 20 to increase as the resistivity of the SMA material increases. This is illustrated by portion 111 of the curve. There is also some thermal expansion, but the resistivity change dominates the change in resistance. As the lengths of SMA wire 20 reaches the phase transition temperature, it changes phase from a Martensitic state to an Austenitic state, resulting in a reduction in resistivity. This causes a reduction in length and an increase in area. These factors combined cause a maximum resistance 112 to occur. After that, the resistance reduces, as illustrated by portion 113 of the curve. The resistance continues to reduce until the opposed lengths of SMA wire 20 experience mechanical resistance from each other, after the slack has been taken up. At that point, a minimum resistance 114 is experienced. After that the resistances increases, as illustrated by portion 115 of the curve. A similar minimum resistance would occur if the length of SMA wire fully transitioned to an Austenitic state, but in a practical actuator assembly the length of SMA wire 20 is configured so that mechanical resistance is encountered first from an opposing length of SMA wire 20.

The degree of slack of the length of SMA wire 20 in the initial slack state affects both the magnitude of the maximum resistance 112, and the magnitude of the minimum resistance 114. Specifically, as the degree of slack increases, the magnitude of the maximum resistance 112 increases and the magnitude of the minimum resistance 114 decreases. The increase in the magnitude of the maximum resistance 112 can be understood as the length of SMA wire 20 undergoing a greater change in resistivity before transition, with increasing initial slack. The decrease in the magnitude of the minimum resistance 114 can be understood as the length of SMA wire 20 undergoing a greater change in both resistivity and length, with increasing initial slack.

Thus, as in the second option for step T3 mentioned above, it is possible for the offsets to be derived from such characteristics of the resistance that depend on the degree of slack, for example the magnitude of the maximum resistance 112, the magnitude of the minimum resistance 114, or the difference therebetween. More generally, other measures of the degree of slack may be derived from the resistance or measurements of other electrical characteristics based on similar considerations of the electro-mechanical properties of slack SMA wire that is subject to a drive signal which causes it to contract

The following additional considerations apply because the SMA actuator assemblies comprises opposed lengths of SMA wire 20.

By way of comparison, in a stiff mechanical harness, the resistance will reach a clear minimum as the tension is taken up, following which wire resistance will increase with increasing temperature. In such cases the difference between maximum and minimum resistance seen, averaged across all wires, can be taken as a measure of the amount of slack in the system. The difference being calibrated for a given material, path length and initial wire diameter.

In contrast, in SMA actuator assemblies where the lengths of SMA wire 20 are opposed, the drop in resistance of each length of SMA wire 20 depends partly on the amount of slack in that length of SMA wire 20, as well as the slack in the opposed lengths of SMA wire 20 which affects the position of the moving part relative to the static part when all the lengths of SMA wire 20 have come into tension. This would require the points at which minimum resistances 114 are measured to be the same for all the lengths of SMA wire 20 .

It is also possible that different lengths of SMA wire 20 reach the transition temperature at different points in time, for example, if they are being heated quickly and are in different thermal environments, or they are being heated by supplying drive signals through the lengths of SMA wire 20. In this case the individual maximum resistance 112 must be assessed in order to ensure the correct starting point for each wire is assessed. If the points are significantly different, the rate of change, and so the absolute temperature, of each wire can be inferred from the point at which the phase transition is seen to start as this is proportional to the wire temperature.

However, such measurements can be simplified by deriving the offsets from the initial resistances 116 of the lengths of SMA wire 20 at ambient temperature measured when the drive signals are first supplied, as in the second option for step T3 mentioned above. Measuring the resistance of all lengths of SMA wire 20 at a known initial temperature simplifies the process as there is no need to evaluate maxima and minima. The drop in resistance due to phase change, for an individual length of SMA wire 20, indicates the amount by which that wire can be stretched out. Thus, for opposing lengths of SMA wire 20, all lengths of SMA wire 20 should have equal stroke when their resistance change at start-up are equal.

In this case, the offsets when applied to the feedback signals in wire space $R_w$, at points A or E in the closed-loop control loop 140, may simply be the negative of the initial resistances 116. The offsets when applied to other signals at the other points B-D, F, H or I in the closed-loop control loop 140, may be derived from the negative initial resistances 116 to provide the same effect, taking into account the linear operations within the loop.

Typically reaching operating point is achieved by applying a drive signal to the lengths of SMA wire 20, pre-calibrated to ensure the system is in tension, but it is also possible to evaluate the wire resistance and use its rate of change with time or current to assess whether the wire is in the phase transition. Whichever solution is used, the difference in mean resistance between the cold state of the lengths of SMA wire 20 in the absence of a drive signal and the state when the lengths of SMA wire 20 are in tension incorporates the increase in resistance caused by heating, causing the wire resistance to increase to the start of the phase transition. This is typically similar for all lengths of SMA wire 20. From this point the phase transition and length change causes each length of SMA wire 20 to reduce in resistance until they come into tension. Such an approach is appropriate since most designs of SMA actuator assembly use multiple wires of the same nominal length and slack, and parts are generally assembled and tested in a controlled temperature environment.

Thus this approach adds an offset to assessing individual maxima, which is dependent on the initial ambient temperature. If this initial ambient temperature is not controlled, but is known, then the offset can be calibrated and the method employing in an environment with uncontrolled, but measured temperature, provided the temperature is below the phase transition start of the actuator material.

As the initial resistance 116 are measured straightaway when the initial drive signal is applied, this provides a very quick test. Most accurate performance is achieved when the lengths of SMA wire 20 are at the same temperature when the initial resistance 116 is measured . In some SMA materials, there is significant hysteresis in phase with temperature, which causes differences in the behaviour as between turning on and turning off (increasing and decreasing wire temperatures). If all lengths of SMA wire 20 have the same thermal history and start in a controlled temperature environment then this is not a concern.

In SMA actuator assemblies where there is a chance of the moving part snagging on turn-on, causing tension to be prematurely reached, it is preferable to perform the test at turn-off after motion of the part has freed off the initial snag. If the actuator has been operated solely between a max and min temperature which are achieved in this test, then off and on change will be interchangeable.

In a related approach of the present techniques, there is provided a non-transitory data carrier carrying processor control code to implement any of the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise sub-components which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

## Claims

1. A method of controlling a shape memory alloy actuator assembly (120) comprising a static part (121), a movable part (122) that is movable with respect to the static part, and plural shape memory alloy wires held between the static part and the movable part and arranged to drive movement of the movable part with respect to the static part in substantially opposite directions in one or more degrees of freedom on application of supplied energy thereto, the plural shape memory alloy wires being slack in the absence of supplied energy,
the method comprising:

measuring electrical characteristics of the lengths of shape memory alloy wire (20) that depend on the degrees of slack of the lengths of shape memory alloy wire in the absence of supplied energy; and
supplying energy to heat the lengths of shape memory alloy wire while measuring resistances of the lengths of shape memory alloy wire, wherein a closed-loop control loop (140) controls the energy supplied in accordance with target signals (R) representing a target position of the movable part with respect to the static part and feedback signals representing the measured resistances in respect of the lengths of shape memory alloy wire,
wherein one or more signals in the closed-loop control loop is adjusted by an offset that is derived from the measured electrical characteristics and compensates for the slack of the lengths of shape memory alloy wire.

2. The method according to claim 1, wherein the energy supplied for heating the lengths of shape memory alloy wire (20) comprises one or more of drive signals or energy supplied by a heat source.

3. The method according to claim 1 or 2, wherein the electrical characteristics that are measured are the resistances of the lengths of shape memory alloy wire.

4. The method according to claim 3, wherein the offset is derived from the resistances of the lengths of shape memory alloy wire measured when the lengths of shape memory alloy wire are at ambient temperature.

5. The method according to claim 3, wherein the offset is derived from the resistances of the lengths of shape memory alloy wire measured when the supplied energy are first supplied to the lengths of shape memory alloy wire.

6. The method according to any one of claims 1 to 5, wherein the step of measuring an electrical characteristic of the lengths of shape memory alloy wires is performed while allowing the movable part to move relative to the static part.

7. The method according to any one of claims 1 to 6, wherein the target signals represent the target position in respect of the one or more degrees of freedom.

8. The method according to claim 7, wherein the closed-loop control loop (140) comprises:

   a target transform block (142) arranged to transform the target signals to represent the target position in respect of the lengths of shape memory alloy wire;
   an error detector (141) arranged to detect error signals ($E_W$) in respect of the lengths of shape memory alloy wire (20) representing errors between the target signals (R) after being transformed and the feedback signals; and
   a controller (144) arranged to control the supplied energy on the basis of the error signals.

9. The method according to claim 8, wherein the one or more signals that are adjusted by the offset are any of the feedback signals, the target signals (R) before being transformed, the target signals after being transformed, or the error signals ($E_W$).

10. The method according to any one of claims 1 to 9, wherein the target signals (R) represent the target position in respect of the lengths of shape memory alloy wire (20), and the closed-loop control loop (140) comprises:

    an error detector (141) arranged to detect error signals in respect of the lengths of shape memory alloy wire representing errors between the target signals and the feedback signals; and
    a controller (144) arranged to control the supplied energy on the basis of the transformed error signals.

11. The method according to claim 10, wherein the one or more signals that are adjusted by the offset are any of the feedback signals, the target signals (R), or the error signals ($E_W$).

12. The method according to claim 6, wherein the closed-loop control loop comprises:

    a feedback transform block (146) arranged to transform the feedback signals to represent resistance measures in respect of the one or more degrees of freedom;
    an error detector (141) arranged to detect error signals ($E_W$) in respect of the one or more degrees of freedom representing errors between the target signals (R) and the feedback signals after being transformed; and
    a controller (144) arranged to control the supplied energy on the basis of the error signals.

13. The method according to claim 12, wherein the one or more signals that are adjusted by the offset are any of the feedback signals before being transformed, the feedback signals after being transformed, the target signals (R), or the error signals ($E_W$).

14. The method according to any one of the claims 1 to 13, further comprises, based on the offset, placing the movable part at a centre position, wherein at the centre position the extent of contraction in the plural lengths of smart memory alloy wire (20), upon receiving the respective supplied energy, are substantially the same.

15. A control circuit for controlling a shape memory alloy actuator assembly (120) comprising a static part (121), a movable part (122) that is movable with respect to the static part, and plural shape memory alloy wires (20) held between the static part and the movable part and arranged to drive movement of the movable part with respect to the static part in opposite directions in one or more degrees of freedom on application of supplied energy thereto, the plural shape memory alloy wires being slack in the absence of supplied energy thereto,
the control circuit (144) comprising:

driver circuits (131) arranged to supply energy to heat the lengths of SMA wire;
resistance measurement circuits (132) arranged to measure resistances of the lengths of shape memory alloy wire; and
a closed-loop control loop (140) arranged to control the supplied heat in accordance with target signals (R) representing a target position of the movable part with respect to the static part and feedback signals representing the measured resistances in respect of the lengths of shape memory alloy wire,
wherein one or more signals in the closed-loop control loop is adjusted by an offset which is derived from the measured electrical characteristics of the lengths of shape memory alloy wire that depend on the degrees of slack of the lengths of shape memory alloy wire in the absence of supplied energy and which compensates for the slack of the lengths of shape memory alloy wire.

**Patentansprüche**

1. Verfahren zum Steuern einer Betätigungsanordnung (120) aus Formgedächtnislegierung, die einen statischen Teil (121), einen beweglichen Teil (122), der in Bezug auf den statischen Teil beweglich ist, und mehrere Formgedächtnislegierungsdrähte umfasst, die zwischen dem statischen Teil und dem beweglichen Teil gehalten werden und angeordnet sind, um eine Bewegung des beweglichen Teils in Bezug auf den statischen Teil in im Wesentlichen entgegengesetzten Richtungen in einem oder mehreren Freiheitsgraden bei Anwendung von zugeführter Energie darauf anzutreiben, wobei die mehreren Formgedächtnislegierungsdrähte in Abwesenheit zugeführter Energie durchhängen, wobei das Verfahren umfasst:

Messen der elektrischen Eigenschaften der Längen des Formgedächtnislegierungsdrahtes (20), die von den Durchhanggraden der Längen des Formgedächtnislegierungsdrahtes in Abwesenheit zugeführter Energie abhängen; und Zuführen von Energie zum Erwärmen der Längen des Formgedächtnislegierungsdrahtes, während Widerstände der Längen des Formgedächtnislegierungsdrahtes gemessen werden, wobei ein geschlossener Regelkreis (140) die zugeführte Energie in Übereinstimmung mit Zielsignalen (R), die eine Zielposition des beweglichen Teils in Bezug auf das statische Teil darstellen, und Rückkopplungssignalen, die die gemessenen Widerstände in Bezug auf die Längen des Formgedächtnislegierungsdrahtes darstellen, steuert,
wobei eines oder mehrere Signale in dem geschlossenen Regelkreis durch einen Offset angepasst werden, der aus den gemessenen elektrischen Eigenschaften abgeleitet wird und den Durchhang der Längen des Formgedächtnislegierungsdrahtes kompensiert.

2. Verfahren nach Anspruch 1, wobei die zum Erwärmen der Längen des Formgedächtnislegierungsdrahtes (20) zugeführte Energie eines oder mehrere von Ansteuersignalen oder von einer Wärmequelle zugeführte Energie umfasst.

3. Verfahren nach Anspruch 1 oder 2, wobei die elektrischen Eigenschaften, die gemessen werden, die Widerstände der Längen des Formgedächtnislegierungsdrahtes sind.

4. Verfahren nach Anspruch 3, wobei der Offset von den Widerständen der Längen aus Formgedächtnislegierungsdraht abgeleitet wird, die gemessen werden, wenn die Längen aus Formgedächtnislegierungsdraht Umgebungstemperatur haben.

5. Verfahren nach Anspruch 3, wobei der Offset von den Widerständen der Längen des Formgedächtnislegierungsdrahtes abgeleitet wird, die gemessen werden, wenn die zugeführte Energie den Längen des Formgedächtnislegierungsdrahtes zuerst zugeführt wird.

6. Verfahren nach einem der Ansprüche 1 bis 5, wobei der Schritt des Messens einer elektrischen Charakteristik der Längen der Drähte aus Formgedächtnislegierung durchgeführt wird, während ermöglicht wird, dass sich das bewegliche Teil relativ zu dem statischen Teil bewegt.

7. Verfahren nach einem der Ansprüche 1 bis 6, wobei die Zielsignale die Zielposition in Bezug auf den einen oder die mehreren Freiheitsgrade darstellen.

8. Verfahren nach Anspruch 7, wobei der geschlossene Regelkreis (140) umfasst:

einen Zieltransformationsblock (142), der angeordnet ist, um die Zielsignale zu transformieren, um die Zielposition in Bezug auf die Längen des Formgedächtnislegierungsdrahtes darzustellen;
einen Fehlerdetektor (141), der angeordnet ist, um Fehlersignale ($E_w$) in Bezug auf die Längen des Formgedächtnislegierungsdrahtes (20) zu erfassen, die Fehler zwischen den Zielsignalen (R) nach der Transformation und den Rückkopplungssignalen darstellen; und
eine Steuerung (144), die so angeordnet ist, dass sie die zugeführte Energie basierend auf den Fehlersignalen steuert.

9. Verfahren nach Anspruch 8, wobei das eine oder die mehreren Signale, die durch den Offset angepasst werden, eines der Rückkopplungssignale, die Zielsignale (R) vor der Transformation, die Zielsignale nach der Transformation oder die Fehlersignale ($E_w$) sind.

10. Verfahren nach einem der Ansprüche 1 bis 9, wobei die Zielsignale (R) die Zielposition in Bezug auf die Längen des Formgedächtnislegierungsdrahtes (20) darstellen, und der geschlossene Regelkreis (140) umfasst:

einen Fehlerdetektor (141), der angeordnet ist, um Fehlersignale in Bezug auf die Längen des Formgedächtnislegierungsdrahtes zu erfassen, die Fehler zwischen den Zielsignalen und den Rückkopplungssignalen darstellen; und
eine Steuerung (144), die so angeordnet ist, dass sie die zugeführte Energie basierend auf den transformierten Fehlersignalen steuert.

11. Verfahren nach Anspruch 10, wobei das eine oder die mehreren Signale, die durch den Offset angepasst werden, eines der Rückkopplungssignale, die Zielsignale (R) oder die Fehlersignale ($E_w$) sind.

12. Verfahren nach Anspruch 6, wobei der geschlossene Regelkreis umfasst:

einen Rückkopplungstransformationsblock (146), der angeordnet ist, um die Rückkopplungssignale zu transformieren, um Widerstandsmaße in Bezug auf den einen oder die mehreren Freiheitsgrade darzustellen;
einen Fehlerdetektor (141), der angeordnet ist, um Fehlersignale ($E_w$) in Bezug auf den einen oder die mehreren Freiheitsgrade zu erfassen, die Fehler zwischen den Zielsignalen (R) und den Rückkopplungssignalen nach der Transformation darstellen; und
eine Steuerung (144), die so angeordnet ist, dass sie die zugeführte Energie basierend auf den Fehlersignalen steuert.

13. Verfahren nach Anspruch 12, wobei das eine oder die mehreren Signale, die durch den Offset eingestellt werden, eines der Rückkopplungssignale vor der Transformation, die Rückkopplungssignale nach der Transformation, die Zielsignale (R) oder die Fehlersignale ($E_w$) sind,

14. Verfahren nach einem der Ansprüche 1 bis 13, das ferner das Anordnen des beweglichen Teils in einer Mittelposition basierend auf dem Offset umfasst, wobei in der Mittelposition das Ausmaß der Kontraktion in den mehreren Längen des Drahtes (20) aus einer Smart-Memory-Legierung nach Erhalt der jeweiligen zugeführten Energie im Wesentlichen gleich ist.

15. Steuerschaltung zum Steuern einer Betätigungsanordnung (120) aus Formgedächtnislegierung, die einen statischen Teil (121), einen beweglichen Teil (122), der in Bezug auf den statischen Teil beweglich ist, und mehrere Formgedächtnislegierungsdrähte (20) umfasst, die zwischen dem statischen Teil und dem beweglichen Teil gehalten werden und angeordnet sind, um eine Bewegung des beweglichen Teils in Bezug auf den statischen Teil in entgegengesetzten Richtungen in einem oder mehreren Freiheitsgraden bei Anwendung von zugeführter Energie darauf anzutreiben, wobei die mehreren Formgedächtnislegierungsdrähte in Abwesenheit daran zugeführter Energie durchhängen,
wobei die Steuerschaltung (144) umfasst:

Treiberschaltungen (131), die so angeordnet sind, dass sie Energie zum Erwärmen der SMA-Drahtabschnitte liefern;
Widerstandsmessschaltungen (132), die so angeordnet sind, dass sie die Widerstände der Längen der Drähte aus Formgedächtnislegierung messen; und
einen geschlossenen Regelkreis (140), der so angeordnet ist, dass er die zugeführte Wärme in Übereinstimmung mit Zielsignalen (R), die eine Zielposition des beweglichen Teils in Bezug auf das statische Teil darstellen, und Rückkopplungssignalen, die die gemessenen Widerstände in Bezug auf die Längen des Formgedächtnislegierungsdrahtes darstellen, steuert, wobei eines oder mehrere Signale in dem geschlossenen Regelkreis durch einen Offset angepasst werden, der von den gemessenen elektrischen Eigenschaften der Längen des Formgedächtnislegierungsdrahtes abgeleitet ist, die von den Durchhangsgraden der Längen aus Formgedächtnislegierungsdraht in Abwesenheit von zugeführter Energie abhängen, und der den Durchhang der Längen aus Formgedächtnislegierungsdraht kompensiert.

## Revendications

1. Procédé de commande d'un ensemble actionneur en alliage à mémoire de forme (120) comprenant une partie statique (121), une partie mobile (122) qui est mobile par rapport à la partie statique, et plusieurs fils en alliage à mémoire de forme maintenus entre la partie statique et la partie mobile et agencés pour entraîner le déplacement de la partie mobile par rapport à la partie statique dans des directions sensiblement opposées selon un ou plusieurs degrés de liberté lors de l'application d'une énergie fournie à ceux-ci, les plusieurs fils en alliage à mémoire de forme étant lâches en l'absence d'énergie fournie, le procédé comprenant :

la mesure des caractéristiques électriques des longueurs de fil en alliage à mémoire de forme (20) qui dépendent des degrés de caractère lâche des longueurs de fil en alliage à mémoire de forme en l'absence d'énergie fournie, et
la fourniture d'énergie pour chauffer les longueurs de fil en alliage à mémoire de forme avec mesure des résistances des longueurs de fil en alliage à mémoire de forme, une boucle de commande en boucle fermée (140) commandant l'énergie fournie en fonction de signaux cibles (R) représentant une position cible de la partie mobile par rapport à la partie statique et de signaux de rétroaction représentant les résistances mesurées en lien avec les longueurs de fil en alliage à mémoire de forme ;
un ou plusieurs signaux dans la boucle de commande en boucle fermée étant ajustés par un décalage qui est dérivé des caractéristiques électriques mesurées et compense le caractère lâche des longueurs de fil en alliage à mémoire de forme.

2. Procédé selon la revendication 1, dans lequel l'énergie fournie pour chauffer les longueurs de fil en alliage à mémoire de forme (20) comprend des signaux d'entraînement et/ou l'énergie fournie par une source de chaleur.

3. Procédé selon la revendication 1 ou 2, dans lequel les caractéristiques électriques qui sont mesurées sont les résistances des longueurs de fil en alliage à mémoire de forme.

4. Procédé selon la revendication 3, dans lequel le décalage est dérivé des résistances des longueurs de fil en alliage à mémoire de forme mesurées lorsque les longueurs de fil en alliage à mémoire de forme sont à température ambiante.

5. Procédé selon la revendication 3, dans lequel le décalage est dérivé des résistances des longueurs de fil en alliage à mémoire de forme mesurées au début de la fourniture d'énergie aux longueurs de fil en alliage à mémoire de forme.

6. Procédé selon l'une quelconque des revendications 1 à 5, dans lequel l'étape de mesure d'une caractéristique électrique des longueurs de fils en alliage à mémoire de forme est réalisée pendant que la partie mobile est amenée à se déplacer par rapport à la partie statique.

7. Procédé selon l'une quelconque des revendications 1 à 6, dans lequel les signaux cibles représentent la position cible en lien avec le ou les degrés de liberté.

8. Procédé selon la revendication 7, dans lequel la boucle de commande en boucle fermée (140) comprend :

un bloc de transformation cible (142) agencé pour transformer les signaux cibles de façon qu'ils représentent la position cible en lien avec les longueurs de fil en alliage à mémoire de forme,
un détecteur d'erreur (141) agencé pour détecter des signaux d'erreur ($E_w$) en lien avec les longueurs de fil en alliage à mémoire de forme (20), représentant des erreurs entre les signaux cibles (R) ayant été transformés et les signaux de rétroaction, et
un dispositif de commande (144) agencé pour commander l'énergie fournie en fonction des signaux d'erreur.

9. Procédé selon la revendication 8, dans lequel le ou les signaux qui sont ajustés par le décalage sont l'un quelconque des types de signaux parmi les signaux de rétroaction, les signaux cibles (R) avant transformation, les signaux cibles après transformation et les signaux d'erreur ($E_w$).

10. Procédé selon l'une quelconque des revendications 1 à 9, dans lequel les signaux cibles (R) représentent la position cible en lien avec les longueurs du fil en alliage à mémoire de forme (20), et la boucle de commande en boucle fermée (140) comprend :

un détecteur d'erreur (141) agencé pour détecter des signaux d'erreur en lien avec les longueurs de fil en alliage à mémoire de forme représentant des erreurs entre les signaux cibles et les signaux de rétroaction, et
un dispositif de commande (144) agencé pour commander l'énergie fournie, en fonction des signaux d'erreur transformés.

11. Procédé selon la revendication 10, dans lequel le ou les signaux qui sont ajustés par le décalage sont l'un quelconque des types de signaux parmi les signaux de rétroaction, les signaux cibles (R) ou les signaux d'erreur ($E_w$).

12. Procédé selon la revendication 6, dans lequel la boucle de commande en boucle fermée comprend :

un bloc de transformation de rétroaction (146) agencé pour transformer les signaux de rétroaction afin qu'ils représentent des mesures de résistance en lien avec le ou les degrés de liberté,

un détecteur d'erreur (141) agencé pour détecter des signaux d'erreur ($E_w$) en lien avec le ou les degrés de liberté, représentant des erreurs entre les signaux cibles (R) et les signaux de rétroaction ayant été transformés, et

un dispositif de commande (144) agencé pour commander l'énergie fournie, en fonction des signaux d'erreur.

13. Procédé selon la revendication 12, dans lequel le ou les signaux qui sont ajustés par le décalage sont l'un quelconque des types de signaux parmi les signaux de rétroaction avant transformation, les signaux de rétroaction après transformation, les signaux cibles (R) et les signaux d'erreur ($E_w$).

14. Procédé selon l'une quelconque des revendications 1 à 13, comprenant en outre, en fonction du décalage, la mise en place de la partie mobile dans une position centrale, sachant qu'à la position centrale, la mesure de la contraction dans les plusieurs longueurs de fil en alliage à mémoire intelligente (20), lors de la réception de l'énergie fournie respective, est sensiblement la même.

15. Circuit de commande destiné à commander un ensemble actionneur en alliage à mémoire de forme (120) comprenant une partie statique (121), une partie mobile (122) qui est mobile par rapport à la partie statique, et plusieurs fils en alliage à mémoire de forme (20) maintenus entre la partie statique et la partie mobile et agencés pour entraîner le déplacement de la partie mobile par rapport à la partie statique dans des directions opposées selon un ou plusieurs degrés de liberté lors de l'application d'une énergie fournie à ceux-ci, les plusieurs fils en alliage à mémoire de forme étant lâches en l'absence d'énergie fournie à ceux-ci,

le circuit de commande (144) comprenant :

des circuits d'attaque (131) agencés pour fournir de l'énergie afin de chauffer les longueurs de fil AMF,

des circuits de mesure de résistance (132) agencés pour mesurer les résistances des longueurs de fil en alliage à mémoire de forme, et

une boucle de commande en boucle fermée (140) agencée pour commander la chaleur fournie, en fonction de signaux cibles (R) représentant une position cible de la partie mobile par rapport à la partie statique et de signaux de rétroaction représentant les résistances mesurées en lien avec les longueurs de fil en alliage à mémoire de forme ;

un ou plusieurs signaux dans la boucle de commande en boucle fermée étant ajustés par un décalage qui est dérivé des caractéristiques électriques mesurées des longueurs de fil en alliage à mémoire de forme qui dépendent des degrés de caractère lâche des longueurs de fil en alliage à mémoire de forme en l'absence d'énergie fournie, et qui compense le caractère lâche des longueurs de fil en alliage à mémoire de forme.

Fig. 1

Fig. 2

Fig. 3

Fig. 6B

Fig. 4

Fig. 6C

Fig. 5

Fig. 6A

Fig. 6D

Fig. 7

Fig. 8

Fig. 9

Fig. 10

Fig. 11

Fig. 12

Fig. 13

Fig. 14

Supply drive signals — T1

Measure resistances — T2

Derive offsets — T3

Closed-loop control — T4

Fig. 15

Offset

149

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007113478 A
- WO 2013175197 A
- WO 2014083318 A
- WO 2011104518 A
- JP 2012137668 A
- WO 2016189314 A